# EUROPEAN PATENT SPECIFICATION

(11) **EP 3 798 480 B1**
(45) Date of publication and mention of the grant of the patent: **28.09.2022**
(21) Application number: 19810194.1
(22) Date of filing: 30.05.2019
(51) Int. Cl.: F16H 61/32, B62M 9/04, F16H 63/18, F16H 3/089, F16D 28/00, F16H 61/682, F16H 57/025, F16H 57/02, F16D 23/12

(54) **STRADDLED VEHICLE**
GRÄTSCHSITZFAHRZEUG
VÉHICULE À ENFOURCHER

(30) Priority: 01.06.2018 JP 2018105908
(43) Date of publication of application: 31.03.2021
(73) Proprietor: Yamaha Hatsudoki Kabushiki Kaisha, Iwata-shi, Shizuoka 438-8501 (JP)
(72) Inventor: TAKEUCHI, Yoshihiko, Iwata-shi, Shizuoka 438-8501 (JP)
(74) Representative: Stöckeler, Ferdinand
(86) International application number: PCT/JP2019/021611
(87) International publication number: WO 2019/230913

(56) References cited:
- JP-A- 2017 219 086
- JP-A- 2017 219 086
- JP-U- 3 158 452
- US-A1- 2012 247 254
- US-A1- 2016 288 879

## Description

### Technical Field

The present invention relates to a straddled vehicle.

### Background Art

Patent Literature 1 (hereinafter, referred to as PTL 1) discloses a motorcycle including a power unit primarily including an internal combustion engine and a multistage transmission device. The internal combustion engine is an air-cooled single-cylinder four-stroke internal combustion engine. The transmission device includes a four-speed transmission device gear engagement mechanism. The transmission device includes a gear-shifting operation mechanism, a clutch operation mechanism, a shift spindle, a gear-shifting motor, and a gear-shifting power transmission mechanism. The gear-shifting operation mechanism actuates the transmission device to switch a gear stage from one to another. The clutch operation mechanism actuates a gear-shifting clutch to disconnect or connect the clutch. The shift spindle drives both the gear-shifting operation mechanism and the clutch operation mechanism. The gear-shifting motor drives the shift spindle via the gear-shifting power transmission mechanism. As a result of rotation of the shift spindle, the clutch operation mechanism actuates the gear-shifting clutch to disconnect or connect the clutch, and the gear-shifting operation mechanism actuates the transmission device to switch the gear stage from one to another.

In the multistage transmission device disclosed in PTL 1, the gear-shifting motor, which is a drive source for switching of the gear stage, is positioned near the shift spindle, which is a driven target for switching of the gear stage. This makes it possible to downsize the multistage transmission device.

US 2016/0288879 A1 discloses a motorcycle comprising an engine including a crankcase having a first inside surface and a second inside surface, the first inside surface being located in a first direction when seen from a center of the straddled vehicle and facing the center of the straddled vehicle, the second inside surface being located in a second direction when seen from the center of the straddled vehicle and facing the center of the straddled vehicle, the first direction and the second direction being opposite to each other and constituting a vehicle width direction,a first crankcase cover located outward of the crankcase in the first direction, a second crankcase cover located outward of the crankcase in the second direction, and a crankshaft rotatably supported by the crankcase; a multistage transmission device; and a driving wheel configured to rotate to cause the straddled vehicle to run upon reception of drive power outputted from the engine and transmitted via the multistage transmission device, wherein the multistage transmission device includes an input shaft rotatably supported by the crankcase, the input shaft being configured to receive the drive power from the crankshaft, the input shaft having a plurality of driving gears, an output shaft rotatably supported by the crankcase, the output shaft having a plurality of driven gears engaged with their corresponding driving gears, the output shaft being configured to output the drive power toward the driving wheel, a clutch disposed on a drive power transmission path extending from the crankshaft to the output shaft and in a space between the crankcase and the first crankcase cover, a clutch motor configured to transmit to the clutch via an operation power transmission mechanism operation power for connecting or disconnecting the, a shift cam rotatably supported by the crankcase such that a shaft of the shift cam is located of the output shaft when seen in the vehicle width direction, the shift cam having a cam part extending in a circumferential direction, the shift cam being configured to rotate to change, among the plurality of driving gears and the plurality of driven gears, paired driving gear and driven gear that transmit the drive power between the input shaft and the output shaft, and a shift motor including a body part and a shaft part that rotatably protrudes from the body part and that is configured to output operation power by rotation, the shift motor being configured to cause the shift cam to rotate by causing the shaft part to rotate for up-shifting or down-shifting such that a rotation direction of the shaft part for up-shifting and a rotation direction of the shaft part for down-shifting are opposite to each other, the shaft part of the shift motor is parallel with the input shaft, the output shaft, and the shaft of the shift cam; wherein the body part is partially located inward of outside surfaces of the first and second crankcase covers in the vehicle width direction; and wherein, when seen in the vehicle width direction, the shaft part is located in the rear of the output shaft; and the shift motor is mounted to the inside surface of the crankcase.

### Citation List

### Patent Literature

PTL 1: Japanese Patent No. 5685105

### Summary of Invention

### Technical Problem

When traveling and/or making a turn with a straddled vehicle, a rider on the straddled vehicle controls the posture of the vehicle body by shifting his/her weight. In order that the posture of the straddled vehicle can be controlled by rider's weight shifting in an efficient manner, the size and weight of the straddled vehicle are preferably small. Therefore, for the straddled vehicle, a further size reduction of the multistage transmission device has been desired.

An object of the present invention is to provide a straddled vehicle with which a multistage transmission device can be further downsized while each mechanism of the multistage transmission device are disposed in suitable environments.

### Solution to Problem

As described above, in the multistage transmission device disclosed in PTL 1, the drive source for switching of the gear stage is disposed near the driven target for switching of the gear stage. Specifically, when seen from a lateral side of the vehicle, the drive source for switching of the gear stage is disposed near the driven target for switching of the gear stage. As such, the conventional multistage transmission device mounted on the straddled vehicle has been designed such that the drive source for switching of the gear stage is disposed near the driven target for switching of the gear stage. Thus, in the multistage transmission device disclosed in PTL 1, the gear-shifting motor functioning as the drive source for switching of the gear stage protrudes to the left in a vehicle width direction.

In addition, in the motorcycle disclosed in PTL 1, the gear-shifting clutch is disposed right of the center of the motorcycle. Also, a driving end of a shift drum (shift cam), to which drive power from the drive source is transmitted, is disposed right of the center of the motorcycle. The drive power from the drive source, which is positioned on the left in the vehicle width direction, is transmitted to the gear-shifting clutch and a gear provided at the driving end of the shift drum (shift cam), which are disposed on the right, via the shift spindle disposed parallel with the vehicle width direction. A rotation angle detection sensor is also disposed right of the center of the motorcycle.

According to a gear-shifting operation mechanism of a conventional general straddled vehicle, a cam-driving mechanism as well as a position-holding mechanism for a shift cam are positioned near the driving end of the shift drum (shift cam) of the transmission device. Thus, the driving end of the shift drum (shift cam) and its vicinity should be disposed in a space into which engine oil is supplied (oil environment) for the purpose of lubrication. In addition, in the vicinity of the driving end of the shift drum (shift cam), a space to store the cam-driving mechanism and the position-holding mechanism should be secured. Meanwhile, a non-driving end of the shift drum (shift cam) is provided with a rotation angle detection sensor. Thus, the non-driving end of the shift drum (shift cam) should be disposed in a space into which engine oil is not supplied (air environment). Generally, in the vicinity of the non-driving end, no device requiring a large space is disposed other than the rotation angle detection sensor. The above discussion focusing on the shift drum (shift cam) shows that the driving end and its vicinity need the oil environment and a relatively large space. On the other hand, the non-driving end and its vicinity need the air environment and do not need a relatively large space.

Now, focusing on the engine, assume that the engine is divided into left and right sections at a vehicle center in a vehicle width direction. In a clutch installation section (e.g., the right section), which is one of the left and right sections, a clutch is disposed in the oil environment inside a case (e.g., inside the right case), and a relatively large space can be secured behind the clutch. Meanwhile, in a clutch non-installation section (e.g., the left section), a drive chain requiring a wide movable range is disposed, and therefore it is difficult to secure a large space protruding greatly from a crankcase.

For this reason, according to the conventional general configuration, the driving end of the shift drum is disposed in the clutch installation section (e.g., the right section), and the non-driving end of the shift drum is disposed in the clutch non-installation section (e.g., the left section).

According to the multistage transmission device disclosed in PTL 1, a power transmission mechanism for transmitting drive power from the drive source to the shift spindle is not disposed in the oil environment. Thus, according to the configuration of PTL 1, the gear-shifting motor is disposed in the clutch non-installation section. As described above, since it is difficult to secure a space around the gear-shifting motor, the gear-shifting motor protrudes greatly in the vehicle width direction. In addition, as shown in the conventional general layout, the shift spindle designed to be installed parallel with the vehicle width direction is adopted so that the driving end of the shift drum can be disposed in the clutch installation section. This reduces the space usable for installation of the devices. In addition, according to the above-described conventional general layout, the rotation angle detection sensor is disposed in the clutch non-installation section. However, according to the configuration of PTL 1, it is difficult to secure a large space in the clutch non-installation section, as described above. Therefore, in order to dispose the rotation angle detection sensor in the air environment, the rotation angle detection sensor needs to protrude in the vehicle width direction in the clutch installation section. Thus, it is impossible to downsize the multistage transmission device disclosed in PTL 1 while disposing each mechanism of the multistage transmission device in suitable environments.

The inventor of the present invention focused on a space around the engine when seen from a lateral side of the vehicle and a space between the crankcase and a crankcase cover. In a straddled vehicle, an engine and a multistage transmission device are disposed between a front wheel and a rear wheel in a front-rear direction of the vehicle. There exists a space beyond which the engine and the multistage transmission device are disposed away from the rear wheel. A space to install the clutch in the space between the crankcase and the crankcase cover is a space suitable for installation of a mechanism requiring lubrication (i.e., a space in the oil environment).

The inventor of the present invention focused on this space, and arrived at an idea of increasing a distance between the drive source for switching of the gear stage and the driven target (e.g., the shift cam) for switching of the gear stage. Specifically, the inventor arrived at an arrangement in which the driven target is disposed in front of the output shaft and the driving source is disposed in the space beyond which the engine and the multistage transmission device are disposed away from the rear wheel and is mounted to an inner side wall of the crankcase in the clutch installation section. According to this arrangement, it is possible to suppress or reduce protrusion of the drive source in the vehicle width direction, while securing a large space (radial distance) between the drive source and the driven target. In this space, an operation power transmission mechanism, such as gears, can be disposed. Also, according to the above arrangement, it is possible to secure a space where a drive power transmission path from the drive source to the shift cam is disposed, and to position the drive power transmission path in an environment suitable for lubrication. This improves a degree of freedom in setting a gear ratio (e.g., a reduction gear ratio). Accordingly, this improves a degree of freedom in selecting the size of the driving source, too. Consequently, it is possible to select a driving source having a size suitable for the above space. This improves a degree of freedom of arrangement of the driving source in the above space, too. As a result, it is possible to further downsize the multistage transmission device, while disposing each mechanism of the multistage transmission device in suitable environments. The inventor has completed the present invention based on the above-described knowledge specific to the straddled vehicle. To be specific, the present invention employs the following features.
(1) A straddled vehicle includes:
   an engine including
      a crankcase having a first inside surface and a second inside surface, the first inside surface being located in a first direction when seen from a center of the straddled vehicle and facing the center of the straddled vehicle, the second inside surface being located in a second direction when seen from the center of the straddled vehicle and facing the center of the straddled vehicle, the first direction and the second direction being opposite to each other and constituting a vehicle width direction,
      a first crankcase cover located outward of the crankcase in the first direction,
      a second crankcase cover located outward of the crankcase in the second direction, and
      a crankshaft rotatably supported by the crankcase;
   a multistage transmission device; and
   a driving wheel configured to rotate to cause the straddled vehicle to run upon reception of drive power outputted from the engine and transmitted via the multistage transmission device, wherein
   the multistage transmission device includes
      an input shaft rotatably supported by the crankcase, the input shaft being configured to receive the drive power from the crankshaft, the input shaft having a plurality of driving gears,
      an output shaft rotatably supported by the crankcase, the output shaft having a plurality of driven gears engaged with their corresponding driving gears, the output shaft being configured to output the drive power toward the driving wheel,
      a clutch disposed on a drive power transmission path extending from the crankshaft to the output shaft and in a space between the crankcase and the first crankcase cover,
      a clutch motor configured to transmit to the clutch via an operation power transmission mechanism operation power for connecting or disconnecting the clutch,
      a shift cam rotatably supported by the crankcase such that a shaft of the shift cam is located in front of the output shaft when seen in the vehicle width direction, the shift cam having a cam part extending in a circumferential direction, the shift cam being configured to rotate to change, among the plurality of driving gears and the plurality of driven gears, paired driving gear and driven gear that transmit the drive power between the input shaft and the output shaft, and
      a shift motor including a body part and a shaft part that rotatably protrudes from the body part and that is configured to output operation power by rotation, the shift motor being configured to cause the shift cam to rotate by causing the shaft part to rotate for up-shifting or down-shifting such that a rotation direction of the shaft part for up-shifting and a rotation direction of the shaft part for down-shifting are opposite to each other, the shift motor being disposed to satisfy all of (A) to (D): (A) the shaft part is parallel with or substantially parallel with the input shaft, the output shaft, and the shaft of the shift cam; (B) the body part is at least partially located inward of outside surfaces of the first and second crankcase covers in the vehicle width direction; (C) when seen in the vehicle width direction, the shaft part is located in the rear of the output shaft such that the output shaft is located between the shaft part and the shaft of the shift cam in a front-rear direction; and (D) the shift motor is mounted to the first inside surface of the crankcase.

According to the configuration described in (1), the shift motor is disposed in the manner satisfying all of the above (A) to (D). Thanks to the above (A), the shafts can be disposed in a compact manner. Thanks to the above (B), protrusion of the shift motor in the vehicle width direction is prevented or reduced. Thanks to the above (C), the shift motor is placed at a location that is in the rear of the shift cam and is relatively far away from the shift cam in the front-rear direction. Thanks to the above (D), a drive power transmission path from the shift motor to the shift cam can be disposed in a space to which engine oil is supplied (oil environment). Thus, by combination of the above (A) to (D), it is possible to dispose the drive power transmission path from the drive source to the shift cam in a suitable environment, while disposing the shafts in a compact manner, preventing or reducing protrusion of the shift motor in the vehicle width direction, and securing a relatively large space between the shift motor and the shift cam (i.e., a relatively distance between the shaft part of the shift motor and the shaft of the shift cam in their radial directions). Accordingly, the operation power transmission mechanism, such as the gears, can be disposed in the space between the shift motor and the shift cam. This improves a degree of freedom in setting a gear ratio (e.g., a reduction gear ratio). This too improves a degree of freedom in selecting the size of the shift motor. Consequently, it is possible to select a shift motor having a size suitable for a space between the engine and the rear wheel. This brings an improvement in the degree of arrangement freedom of the shift motor using this space, too. As a result, it is possible to further downsize the multistage transmission device, while disposing each mechanism of the multistage transmission device in suitable environments.

(2) The straddled vehicle described in (1) is configured such that
the body part of the shift motor is mounted to the first inside surface of the crankcase such that the shaft part extends outwardly in the vehicle width direction from the body part.

With the configuration described in (2), the body part of the shift motor is provided on the first inside surface of the crankcase such that the shaft part of the shift motor extends outwardly (i.e., in the first direction) in the vehicle width direction from the body part. Consequently, the shaft part of the shift motor protrudes into the space between the crankcase and the first crankcase cover. That is, with the configuration described in (2), the drive power transmission path from the shift motor to the shift cam can be disposed in the space to which engine oil is supplied. As a result, it is possible to further downsize the multistage transmission device, while disposing the power transmission mechanism of the multistage transmission device in a suitable environment.

(3) The straddled vehicle described in (1) or (2) is configured such that
the crankcase has a support wall supporting at least the crankshaft, and
the body part of the shift motor is mounted to the support wall such that the body part of the shift motor is supported at least by the support wall.

The support wall supporting at least the crankshaft is an essential member for the crankcase. Since the support wall supports the crankshaft, which is related to transmission device of drive power, the support wall has a relatively high mechanical strength. Thus, with the configuration described in (3), a support member to which the body part of the shift motor is provided can be omitted or simplified. In addition, the support wall is positioned relatively inward of the engine in the vehicle width direction. The "inward" herein refers to a direction oriented toward the center of the vehicle body. In particular, in single-cylinder engines, a support wall supporting a crankshaft is often disposed at an innermost location in a vehicle width direction. Thus, by mounting the shift motor to the support wall, it is possible to prevent or reduce protrusion of the shift motor in the vehicle width direction. Thanks to the prevention or reduction of the protrusion of the shift motor in the vehicle width direction, effects on the position of a footrest, the installation position of a drive chain, a weight balance of the vehicle, and/or the like are suppressed or reduced, too. Accordingly, it is possible to further downsize the multistage transmission device in a manner suitable for the straddled vehicle. The support wall supporting the body part of the shift motor has the first inside surface, for example.

The configuration described in (3) is based on a new design concept that differs from conventional ones. The reason will be explained below.

The shift motor is a motor that operates at the time of gear shifting. In order to switch a gear stage from one to another, the shift motor needs to rotate at both an accurate speed and at an accurate angle such that a rotation direction for up-shifting and a rotation direction for down-shifting are opposite to each other. In addition, since the shift motor needs to operate while the engine is running, the shift motor is likely to be affected by vibrations and heat generated while the engine is running.

A conventional shift motor has been installed in a mode in which the shift motor is hardly affected by the vibrations and heat. More specifically, a conventional shift motor has been mounted to a crankcase cover attached to a crankcase via a gasket, and another conventional shift motor is mounted to an actuator case independent of an engine. Thus, conventionally, persons skilled in the art have not conceived mounting of the shift motor to the crankcase (the support wall for the crankshaft), which is directly subjected to the vibrations and heat.

On the other hand, as described above, the inventor found that, by disposing the shift motor in the manner satisfying all of the above (A) to (D), it is possible to dispose a vibration and heat reduction member between the shift motor and the crankcase while avoiding upsizing of the engine and the multistage transmission device. Therefore, even if the shift motor is mounted to the support wall, the shift motor is hardly affected by vibrations and heat. By mounting the shift motor to the support wall, it is possible to further downsize the multistage transmission device, as described above.

(4) The straddled vehicle described in any one of (1) to (3) is configured such that
the crankcase has a support wall supporting at least the output shaft and the input shaft, and
the body part of the shift motor is mounted to the support wall such that the body part of the shift motor is supported at least by the support wall.

In the straddled vehicle including the multistage transmission device, the support wall supporting at least the output shaft and the input shaft is an essential member for the crankcase. Since the support wall supports the output shaft and the input shaft, each of which is related to transmission device of drive power, the support wall has a relatively high mechanical strength. Therefore, with the configuration described in (4), a support member to which the body part of the shift motor is mounted can be omitted or simplified. In addition, the support wall is positioned relatively inward of the engine in the vehicle width direction. In particular, in single-cylinder engines, the support wall supporting the output shaft and the input shaft is often disposed at an innermost location in the vehicle width direction. Thus, by mounting the shift motor to the support wall, protrusion of the shift motor in the vehicle width direction will be prevented or reduced. Thanks to the prevention or reduction of the protrusion of the shift motor in the vehicle width direction, the effects on the position of the footrest, the installation position of the drive chain, the weight balance of the vehicle, and/or the like are suppressed or reduced, too. Accordingly, it is possible to further downsize the multistage transmission device in a manner suitable for the straddled vehicle. The support wall supporting the output shaft and the input shaft may be identical to or different from the support wall supporting the crankshaft.

The configuration described in (4) is based on a new design concept that is different from conventional ones. The reason will be explained below.

As described above, the shift motor is likely to be affected by vibrations and heat generated while the engine is running. Thus, conventionally, persons skilled in the art have not conceived of mounting the shift motor to the crankcase (the support wall for the input shaft and the output shaft), which is directly subjected to the vibrations and heat.

On the other hand, as described above, the inventor found that, by disposing the shift motor in the manner satisfying all of the above (A) to (D), it is possible to dispose a vibration and heat reduction member between the shift motor and the crankcase while avoiding upsizing of the engine and the multistage transmission device. Therefore, even if the shift motor is mounted to the support wall, the shift motor is hardly affected by the vibrations and heat. By mounting the shift motor to the support wall, it is possible to further downsize the multistage transmission device, as described above.

(5) The straddled vehicle described in any one of (2) to (4) is configured such that
the clutch motor has a body part and a shaft part rotatably protruding from the body part and being configured to output operation power by rotation, and
the body part of the clutch motor is mounted to the second inside surface of the crankcase such that the shaft part extends outwardly in the vehicle width direction from the body part.

With the configuration described in (5), the shift motor is supported by the first inside surface of the crankcase. Meanwhile, the clutch motor is supported by the second inside surface of the crankcase. The shaft part of the shift motor and the shaft part of the clutch motor extend toward opposite sides in the vehicle width direction. Thus, the motor installation position of the shift motor and the motor installation position of the clutch motor do not overlap each other in the front-rear direction and the top-bottom direction. That is, the motor installation positions can be separate. Consequently, the multistage transmission device including the shift motor and the clutch motor can be disposed in a compact manner as a whole. Note that the support wall supporting the body part of the clutch motor includes the second inside surface, for example.

(6) The straddled vehicle described in any one of (2) to (5) is configured such that
the crankcase has a support wall supporting at least the crankshaft, and
the body part of the clutch motor is mounted to the support wall such that the body part of the clutch motor is supported at least by the support wall.

The support wall supporting at least the crankshaft is an essential member for the crankcase. Since the support wall supports the crankshaft, which is related to transmission device of drive power, the support wall has a relatively high mechanical strength. Therefore, with the configuration described in (6), a support member to which the body part of the clutch motor is mounted can be omitted or simplified. In addition, the support wall is positioned relatively inward of the engine in the vehicle width direction. Thus, by mounting the shift motor to the support wall, protrusion of the shift motor in the vehicle width direction will be prevented or reduced. Thanks to the prevention or reduction of the protrusion of the shift motor in the vehicle width direction, the effects on the position of the footrest, the installation position of the drive chain, the weight balance of the vehicle, and/or the like are suppressed or reduced, too. Accordingly, it is possible to further downsize the multistage transmission device in a manner suitable for the straddled vehicle.

(7) The straddled vehicle described in any one of (2) to (6) is configured such that
the crankcase has a support wall supporting at least the output shaft and the input shaft, and
the body part of the clutch motor is mounted to the support wall such that the body part of the clutch motor is supported at least by the support wall.

The support wall supporting at least the output shaft and the input shaft is an essential member for the crankcase. Since the support wall supports the output shaft and the input shaft, each of which is related to transmission device of drive power, the support wall has a relatively high mechanical strength. Therefore, with the configuration described in (7), a support member to which the body part of the clutch motor is mounted can be omitted or simplified. In addition, the support wall is positioned relatively inward of the engine in the vehicle width direction. Thus, by mounting the shift motor to the support wall, protrusion of the shift motor in the vehicle width direction will be prevented or reduced. Thanks to the prevention or reduction of the protrusion of the shift motor in the vehicle width direction, the effects on the position of the footrest, the installation position of the drive chain, the weight balance of the vehicle, and/or the like are suppressed or reduced, too. Accordingly, it is possible to further downsize the multistage transmission device in a manner suitable for the straddled vehicle.

(8) The straddled vehicle described in any one of (1) to (7) is configured such that
the crankcase is a left-right split type crankcase, the crankcase is mounted to the straddled vehicle such that a mating plane of the crankcase extends along the front-rear direction, and
the body part of the shift motor is disposed to overlap a plane including the mating plane of the crankcase.

With the configuration described in (8), protrusion of the shift motor in the vehicle width direction is further prevented or reduced. Accordingly, it is possible to further downsize the multistage transmission device in a manner suitable for the straddled vehicle.

(9) The straddled vehicle described in (8) is configured such that
the crankcase is constituted by a first case member disposed in the first direction relative to the mating plane of the crankcase when seen from the center of the straddled vehicle and a second case member disposed in the second direction relative to the mating plane of the crankcase when seen from the center of the straddled vehicle, and
the first case member has the first inside surface.

With the configuration described in (9), the shift motor is attached to the first inside surface of the first case member of the crankcase. Consequently, the drive power transmission path from the shift motor to the shift cam can be disposed in the space to which engine oil is supplied. As a result, it is possible to further downsize the multistage transmission device, while disposing the power transmission mechanism of the multistage transmission device in a suitable environment.

(10) The straddled vehicle described in (9) is configured such that
the second case member has the second inside surface, and
the clutch motor is mounted to the second inside surface.

With the configuration described in (10), the shift motor is supported by the first inside surface of the first case member of the crankcase. Meanwhile, the clutch motor is supported by the second inside surface of the second case member of the crankcase. Thus, the motor installation position of the shift motor and the motor installation position of the clutch motor do not overlap each other in the front-rear direction and the top-bottom direction. That is, the motor installation positions can be separate. In addition, two motors, specifically, the shift motor and the clutch motor are respectively installed to the left and right parts of the left-right split type crankcase in a separated manner. Thus, protrusion of the motor installation positions in these parts of the crankcase can be prevented or reduced. Consequently, the multistage transmission device including the shift motor and the clutch motor can be disposed in a compact manner as a whole.

(11) The straddled vehicle described in any one of (1) to (10) is configured such that
the shift cam has a driven gear located in the first direction when seen from the center of the straddled vehicle, the shift cam being configured to receive the drive power transmitted from the shift motor.

With the configuration described in (11), the gear of the shift cam can be readily disposed in a space to which engine oil is supplied (a space in the oil environment).

(12) The straddled vehicle described in (10) is configured such that
the shift cam is provided with a shift-cam phase sensor located in the second direction when seen from the center of the straddled vehicle, the shift-cam phase sensor being configured to detect a rotational position in the circumferential direction of the shift cam.

With the configuration described in (12), the shift-cam phase sensor can be disposed in a space to which engine oil is not supplied (a space in the air environment).

(13) The straddled vehicle described in any one of (1) to (12) is configured such that
the engine has a displacement of 300 cc or less,
the driving wheel is disposed in the rear of the engine in the front-rear direction, and
the shift motor is disposed between a rotational axis line of the crankshaft of the engine having a displacement of 300 cc or less and the driving wheel when seen in the vehicle width direction.

According to the configuration described in (13), a straddled vehicle including a relatively small engine having a displacement of 300 cc or less may include a shift motor disposed in the manner satisfying all of (A) to (D). This makes it possible to effectively utilize, as an installation space of the shift motor, a space between the engine and the driving wheel in the front-rear direction. Thus, in the straddled vehicle including the relatively small engine, the multistage transmission device including the shift motor can be disposed in a compact manner as a whole.

(14) The straddled vehicle described in any one of (1) to (13) is configured such that
both the shift motor and the shift cam are disposed in a lower area or an upper area, the lower area residing below the output shaft, the upper area residing above the output shaft.

With the configuration described in (14), it is possible to secure a relatively large space between the shift motor and the shift cam, while employing the mode in which the operation power transmission mechanism from the shift motor to the shift cam can be disposed in a relatively easy manner. As a result, it is possible to further downsize the multistage transmission device.

(15) The straddled vehicle described in any one of (1) to (14) is configured such that
the clutch is mounted to the crankshaft or the input shaft, and the clutch is configured to be switched between a transmission state where a rotational force of the crankshaft is transmitted to the driving wheel and an interruption state where the rotational force is interrupted, and
the shift motor is disposed to have a gap between the shift motor and the clutch when seen in the vehicle width direction.

With the configuration described in (15), it is possible to achieve a compact arrangement, and to secure a long distance between the shift motor and the shafts (the input shaft, the output shaft, and the crankshaft). Consequently, it is possible to secure a far larger space between the shift motor and the shift cam. This makes it possible to improve a degree of freedom in selecting a shift motor and a degree of arrangement freedom of the shift motor. As a result, it is possible to further downsize the multistage transmission device.

(16) The straddled vehicle described in any one of (1) to (15) is configured such that
the crankcase includes two engine suspending portions disposed at locations different each other in a top-bottom direction when seen in the vehicle width direction, and
the shift motor is disposed such that the body part of the shift motor is at least partially positioned between the two engine suspending portions in the top-bottom direction and overlaps the two engine suspending portions in the top-bottom direction.

With the configuration described in (16), it is possible to dispose the shift motor at a location that is in the rear of the shift cam and is relatively far away from the shift cam in the front-rear direction, and to prevent or reduce rearward relocation of the engine suspending portions when the shift motor is disposed. For example, it is possible to dispose the shift motor at a location that is in the rear of the shift cam and is relatively far away from the shift cam with the conventional positions of the engine-suspending portions maintained. Consequently, it is possible to further downsize the multistage transmission device, while preventing or reducing changes in the vehicle configuration.

The straddled vehicle refers to a vehicle including a saddle on which a rider can straddle. The straddled vehicle is configured to travel or make a turn by rider's weight shifting. The straddled vehicle includes a handle bar that can be held by the rider. When traveling or making a turn with the straddled vehicle, the rider controls the vehicle's posture by shifting his/her weight while holding the handle bar with his/her hands. The straddled vehicle includes the driving wheel. There is no particular limitation on the straddled vehicle. Examples of the straddled vehicle encompass a motorcycle (a two-wheeled motorcycle and a three-wheeled motorcycle) and an all-terrain vehicle (ATV). The straddled vehicle according to the present teaching is preferably a straddled vehicle configured to make a turn in a leaning posture. The straddled vehicle may employ an under-bone type frame structure, for example. The straddled vehicle includes a swing arm rotatably supporting the driving wheel and being swingably mounted to the vehicle body, for example. In this case, the driving wheel is a rear wheel, for example. Alternatively, a front wheel may be a driving wheel. Further alternatively, a front wheel and a rear wheel may be driving wheels. In a case of a three-wheeled motorcycle including two front wheels, the two front wheels may be driving wheels or a single rear wheel may be a driving wheel. In a case of a three-wheeled motor vehicle including two rear wheels, a single front wheel may be a driving wheel or the two rear wheels may be driving wheels.

One example of the engine is a four-stroke engine. One example of the engine can be a petrol engine. Alternatively, another example of the engine may be a diesel engine. One example of engine can be a water-cooled engine. Alternatively, the engine may be an air-cooled engine. The engine can be an intake pipe injection type engine, for example. Alternatively, the engine may be a direct injection type engine. The engine can be a single-cylinder engine, for example. Alternatively, the engine may be a multi-cylinder engine. The engine is preferably a single-cylinder engine or a double-cylinder engine. The engine is more preferably a single-cylinder engine, a parallel double cylinder engine, or a V-shaped double cylinder engine. The engine is far more preferably a single-cylinder engine or a parallel double cylinder engine. The multi-cylinder engine may be an equal-interval explosion engine or an unequalinterval explosion engine. The same applies to the double-cylinder engine. The single-cylinder engine or the double-cylinder engine includes a relatively short crankshaft, and therefore can be disposed at a relatively low position while preventing interference with a bank line. By positioning the input shaft, to which the clutch is mounted, to a location above the output shaft and the crankshaft in this state, it is possible to prevent or reduce contact between the clutch and oil while preventing interference between the clutch and the bank line. Thus, the engine is preferably a single-cylinder or double-cylinder engine, and the input shaft, to which the clutch is mounted, is preferably disposed above the output shaft and the crankshaft. There is no particular limitation to the displacement of the engine. However, the displacement of the engine is preferably 300 cc or less, for example. In a straddled vehicle including a relatively small engine having a displacement of 300 cc or less, a space between an engine and a driving wheel in a front-rear direction can be effectively utilized as an installation space of a shift motor, so that a multistage transmission device including a shift motor can be disposed in a compact manner as a whole.

The crankcase is configured to rotatably support the crankshaft. One example of the crankcase has two support walls supporting the crankshaft. The two support walls are disposed such that the two support walls are spaced from each other in the axial direction of the crankshaft. The axial direction of the crankshaft is parallel with the vehicle width direction, for example. The crankcase has two support walls supporting the input shaft and the output shaft, for example. The two support walls supporting the crankshaft may be identical in thickness to the two support walls supporting the input shaft and the output shaft, or the two support walls supporting the crankshaft may be different in thickness from the two support walls supporting the input shaft and the output shaft. The two support walls supporting the crankshaft may be positioned at different locations from the two support walls supporting the input shaft and the output shaft in the axial direction of the crankshaft. Alternatively, the two support walls supporting the crankshaft may be positioned at identical locations to the two support walls supporting the input shaft and the output shaft in the axial direction of the crankshaft. The crankcase is designed to cover an area around rotating parts of the crankshaft so as to be spaced from the crankshaft in the radial direction of the crankshaft, for example. The crankcase may be integrated with a cylinder block or may be separated from the cylinder block.

The crankcase cover is disposed outward in the vehicle width direction of the crankcase. For example, the crankcase cover is designed to cover the crankcase so as to be spaced from the crankcase in the vehicle width direction.

The multistage transmission device has multiple gear stages. In addition, the multistage transmission device may have a neutral position. There is no particular limitation on the number of gear stages. For example, the multistage transmission device may have four to six gear stages in addition to the neutral position. The multistage transmission device may further have a parking position. The multistage transmission device may further have a reverse position. The multistage transmission device is a transmission device of bottom-neutral type, for example. Alternatively, the multistage transmission device may be a transmission device of half-neutral type (bottomlow type). The bottom-neutral type refers to a shift pattern in which a neutral position is arranged below the first speed. The half-neutral type refers to a shift pattern in which the neutral position is arranged between the first speed and the second speed. The multistage transmission device is a return-type transmission device, for example. Alternatively, the multistage transmission device may be a rotary-type transmission device.

The input shaft is parallel with or substantially parallel with the crankshaft. The input shaft has a gear engageable with the gear provided to the crankshaft, for example. The input shaft is configured to receive drive power inputted from the crankshaft via the gear. The input shaft is coaxial to the crankshaft. The input shaft has driving gears associated with their corresponding gear stages. The driving gears are arranged side by side in an axial direction of the input shaft, for example.

The output shaft is parallel with or substantially parallel with the input shaft. The output shaft has driven gears associated with their corresponding gear stages. The driven gears are engaged with their corresponding driving gears. For example, the output shaft is provided with a sprocket, around which a drive chain is wound. The output shaft transmits drive power to the driving wheel via the drive chain. The mode for transmitting drive power from the output shaft to the driving wheel is not limited to this example.

The shift cam is rotatably supported by the crankcase. The shift cam has a cam part extending in a circumferential direction. For example, the cam part may be a groove or a protrusion. To the cam part, a member (e.g., a shift fork, which will be described later) configured to be movable in the axial direction is engaged. The cam part is formed to cause the member to move in the axial direction as the shift cam rotates. As a result of rotation of the shift cam, the shift cam causes the member to move in the axial direction. This changes, among the driving gears and the driven gears, paired driving gear and driven gear that transmit drive power between the input shaft and the output shaft. For example, the paired driving gear and driven gear is changed by dog engagement, which will be described later. Alternatively, the paired driving gear and driven gear may be changed by means of a ratchet.

The shift motor includes the body part and the shaft part. The body part is designed to accommodate a stator and a rotor therein. The shaft part rotatably protrudes from the body part. The shaft part is configured to output operation power by rotation. There is no particular limitation on the shift motor. A conventionally known motor can be adopted. The multistage transmission device includes the clutch motor in addition to the shift motor. The clutch motor is a motor for connecting or disconnecting the clutch. The shift motor does not function also as the clutch motor. The operation power from the shift motor is used to cause the shift cam to rotate, but is not used to connect or disconnect the clutch.

The clutch is configured to be connected or disconnected by the clutch motor. The clutch is installed on the drive power transmission path from the crankshaft to the output shaft. The drive power transmission path is a path constituted by the crankshaft, the input shaft, the driving gears, the driven gears, and the output shaft in this order. For example, the clutch is mounted to any one of the crankshaft, the input shaft, or the output shaft. For another example, the clutch is mounted to the crankshaft or the input shaft. For further another example, the clutch is mounted to the input shaft. The clutch motor is configured to transmit operation power to the clutch via the operation power transmission mechanism. The connection or disconnection of the clutch by means of the clutch motor may be conducted in response to rider's manipulation of the clutch, or may be conducted not in response to rider's manipulation of the clutch. Even with a configuration in which the connection or disconnection of the clutch is conducted in response to rider's manipulation of the clutch, the connection or disconnection of the clutch is not executed by a manipulation force applied by the rider, but is executed by the clutch motor (clutch-by-wire).

The clutch motor includes the body part and the shaft part. The body part is designed to accommodate a stator and a rotor therein. The shaft part rotatably protrudes from the body part. The shaft part is configured to output operation power by rotation. There is no particular limitation on the clutch motor. A conventionally known motor can alternatively be adopted.

The operation power transmission mechanism transmits operation power from the clutch motor to the clutch so that disconnection or connection of the clutch is executed by operation power from the clutch motor, for example. The operation power transmission mechanism includes a converting mechanism configured to convert a rotational motion caused by the operation power outputted from the clutch motor into a reciprocating motion for disconnection or connecting the clutch, for example. The converting mechanism is preferably at least partially included in the space between the crankcase and the crankcase cover. This can prevent or reduce upsizing of the multistage transmission device. In addition, the operation power transmission mechanism includes a reduction gear mechanism for improving the torque of the operation power outputted from the clutch motor, for example. The reduction gear mechanism is preferably at least partially included in the space between the crankcase and the crankcase cover. This can prevent or reduce upsizing of the multistage transmission device.

The terminology used herein is for defining particular embodiments only, and is not intended to limit the invention.

teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. In addition, the terms "connected" and "coupled" can mean not only physical or mechanical connection or coupling, but also direct or indirect electrical connection or coupling. Unless otherwise defined, all terms (including technical and scientific terms) used herein have the same meaning as commonly understood by one of ordinary skilled in the art to which the present invention belongs. It will be further understood that terms, such as those defined in commonly used dictionaries, should be interpreted as having a meaning that is consistent with their meaning in the context of the present disclosure and relevant art, and should not be interpreted in an idealized or overly formal sense unless expressly so defined herein. In the description given below, for the purposes of explanation, numerous specific details are set forth in order to provide a thorough understanding of the present invention. It will be apparent, however, that those skilled in the art may practice the present invention without these specific details. The present disclosure is to be considered as an exemplification of the present invention, and is not intended to limit the present invention to the specific embodiments illustrated by drawings or descriptions below.

### Advantageous Effects of Invention

According to the present invention, it is possible to provide a straddled vehicle with which a multistage transmission device can be further downsized.

### Brief Description of Drawings

[FIG. 1] A drawing for explaining an outline of a motorcycle according to an embodiment.
[FIG. 2] A left side view schematically illustrating the motorcycle according to the embodiment.
[FIG. 3] A left side view schematically illustrating an engine and a multistage transmission device included in the motorcycle shown in FIG. 2.
[FIG. 4] A partial enlarged view of a part of the view of FIG. 3.
[FIG. 5] A partial enlarged view of another part of the view of FIG. 3.
[FIG. 6] A side view schematically illustrating a crankcase cover covering a left end of a crankshaft.
[FIG. 7] A right side view schematically illustrating the engine and the multistage transmission device included in the motorcycle shown in FIG. 2.
[FIG. 8] A partial enlarged view of a part of the view of FIG. 7.
[FIG. 9] A vertical cross-sectional view of the multistage transmission device shown in FIG. 7.
[FIG. 10] A cross-sectional developed view taken along line I-I in FIG. 9.
[FIG. 11] A cross-sectional developed view taken along line II-II in FIG. 9.
[FIG. 12] A cross-sectional developed view taken along line III-III in FIGs. 5 and 6.
[FIG. 13] Across-sectional developed view taken along line IV-IV in FIGs. 3 and 4.
[FIG. 14] A cross-sectional developed view taken along line V-V in FIG. 5.

### Description of Embodiments

### [Overall Structure]

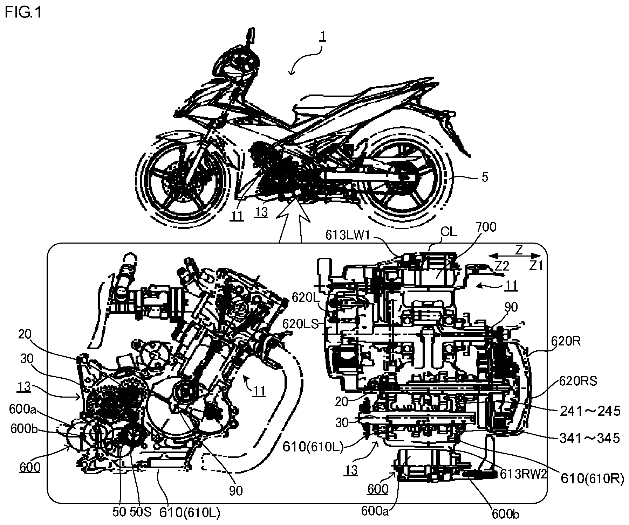

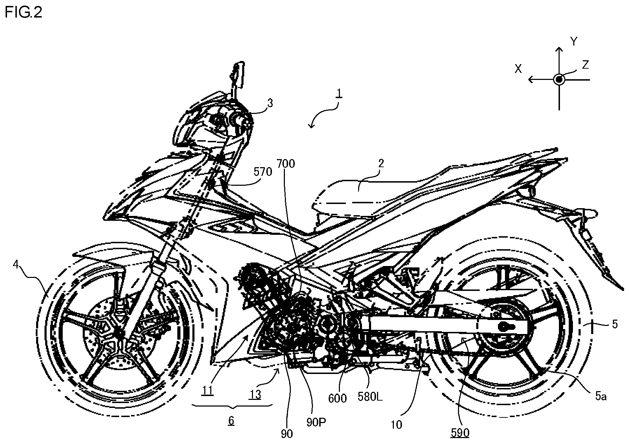

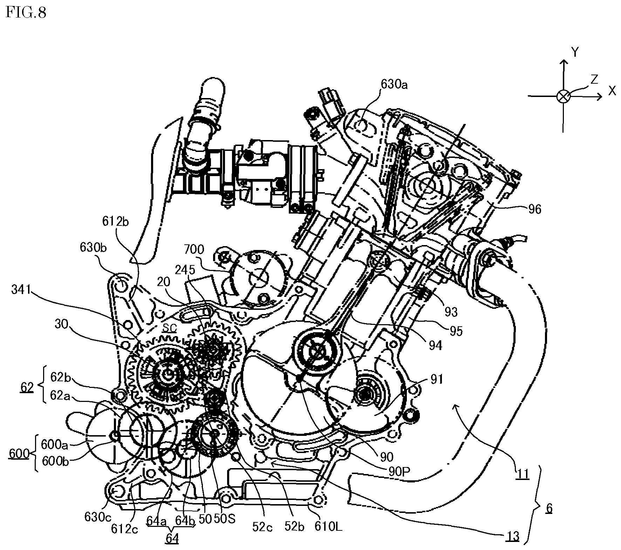

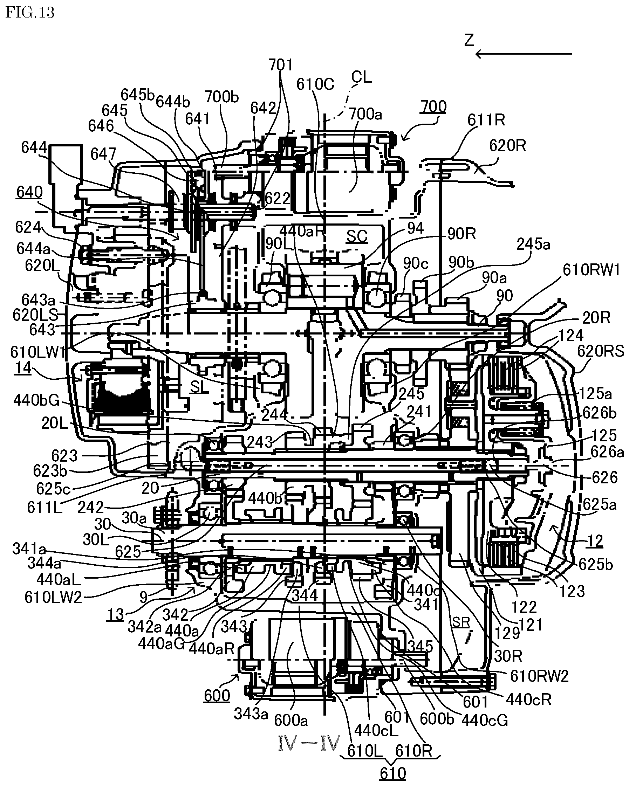

Firstly, with reference to FIG. 1, the following will describe an outline of a motorcycle according to an embodiment. FIG. 1 is a drawing for explaining an outline of the motorcycle. An upper part of FIG. 1 corresponds to FIG. 2. A lower left part of FIG. 1 corresponds to FIG. 8. A lower right part of FIG. 1 corresponds to FIG. 13.

A motorcycle 1 includes an engine 11, a multistage transmission device 13, and a rear wheel 5 that is a driving wheel. The engine 11 includes a crankcase 610 (610R, 610L), crankcase covers 620R and 620L, and a crankshaft 90. In a vehicle width direction Z, the crankcase 610 has a first inside surface 613RW2, which is located in a right direction Z1 when seen from a center (center line CL) of the motorcycle 1, and which faces the center (center line CL) of the motorcycle 1, and a second inside surface 613LW1, which is located in a left direction Z2 when seen from the center (center line CL) of the motorcycle 1 and which faces the center (center line CL) of the motorcycle 1. In the vehicle width direction Z, the crankcase cover 620R is disposed outward in the right direction Z1 of the crankcase 610. In the vehicle width direction Z, the crankcase cover 620L is disposed outward in the left direction Z2 of the crankcase 610. The crankshaft 90 is rotatably supported by the crankcase 610. Upon reception of drive power outputted from the engine 11 and transmitted via the multistage transmission device 13, the rear wheel 5 rotates to cause the motorcycle 1 to run. In the present embodiment, the right side Z1 corresponds to the first direction, and the left direction Z2 corresponds to the second direction. However, the first direction and the second direction are not limited to this example. Alternatively, the first direction and the second direction may be replaced with each other.

The multistage transmission device 13 includes an input shaft 20 and an output shaft 30. The input shaft 20 is rotatably supported by the crankcase 610. The input shaft 20 receives drive power from the crankshaft 90. The input shaft 20 has a plurality of driving gears 241 to 245. The output shaft 30 is rotatably supported by the crankcase 610. The output shaft 30 includes a plurality of driven gears 341 to 345. The driven gears 341 to 345 are engaged with their corresponding driving gears 241 to 245. The output shaft 30 outputs the drive power to the rear wheel 5.

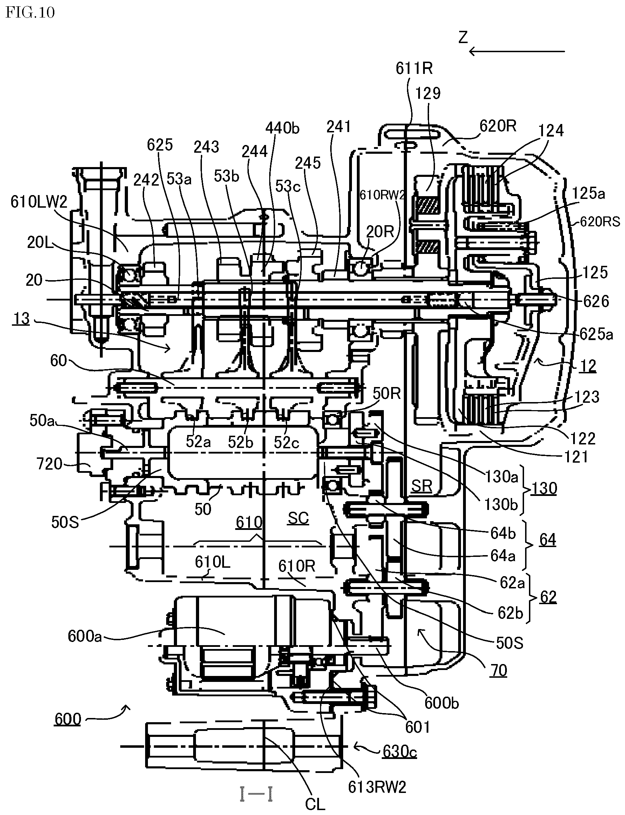

The multistage transmission device 13 includes a shift cam 50 and a shift motor 600. The shift cam 50 is rotatably supported by the crankcase 610 such that a shaft 50S is located in front of the output shaft 30 when seen in the vehicle width direction. The shift cam 50 has cam grooves 52a to 52c (see FIG. 10) extending in a circumferential direction. The cam grooves 52a to 52c are one example of the cam part. The shift cam 50 rotates to change, among the driving gears 241 to 245 and the driven gears 341 to 345, paired driving gear and driven gear that transmit drive power between the input shaft 20 and the output shaft 30.

The shift motor 600 includes a body part 600a and a shaft part 600b. The shaft part 600b rotatably protrudes from the body part 600a, and is configured to output operation power by rotation. The shift motor 600 is configured to cause the shift cam 50 to rotate by causing the shaft part 600b to rotate for up-shifting or down-shifting such that a rotation direction for up-shifting and a rotation direction for down-shifting are opposite to each other. The shift motor 600 is disposed in a manner satisfying all of (A) to (D) below. (A) The shaft part 600b is parallel with or substantially in parallel with the input shaft 20, the output shaft 30, and the shaft 50S of the shift cam 50. (B) The body part 600a is at least partially disposed inward of outside surfaces 620LS and 620RS of the crankcase covers 620L and 620R in the vehicle width direction. (C) When seen in the vehicle width direction, the shaft part 600b is located in the rear of the output shaft 30 such that the output shaft 30 is located between the shaft part 600b and the shaft 50S of the shift cam 50 in a front-rear direction. (D) The shift motor 600 is mounted to the inside surface 613RW2 of the crankcase 610.

The multistage transmission device 13 includes a clutch 12, a clutch motor 700, and an operation power transmission mechanism 640. The clutch 12 is installed on a drive power transmission path from the crankshaft 90 to the output shaft 30. The drive power transmission path is a path constituted by the crankshaft 90, the input shaft 20, the driving gears 241 to 245, the driven gears 341 to 345, and the output shaft 30 in this order. The clutch 12 is mounted to the input shaft 20. The clutch motor 700 includes a body part 700a and a shaft part 700b. The clutch motor 700 outputs operation power for connecting or disconnecting the clutch 12. The shaft part 700b rotatably protrudes from the body part 700a, and is configured to output power by rotation. The operation power transmission mechanism 640 is configured to transmit the operation power from the clutch motor 700 to the clutch 12. The operation power transmission mechanism 640 is at least partially included in a space SL between the crankcase 610 and the crankcase cover 620L.

With reference to the drawings, details of the motorcycle 1 according to the embodiment will be described below. The X direction corresponds to a front-rear direction of the motorcycle 1. The Y direction corresponds to a top-bottom direction of the motorcycle 1. The Z direction corresponds to the vehicle width direction of the motorcycle 1. In FIG. 2, the Z direction coincides with the direction of coming out and going into the drawing plane of FIG. 2. FIG. 2 is a side view illustrating the whole of the motorcycle 1. FIG. 2 shows the engine 11 and the multistage transmission device 13 of the motorcycle 1 as well as internal structures thereof in order to indicate the positions of the engine 11, the multistage transmission device 13, and the internal structures thereof.

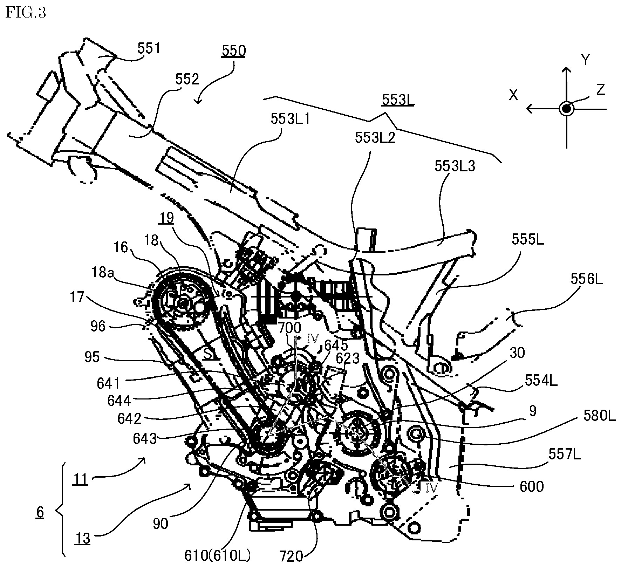

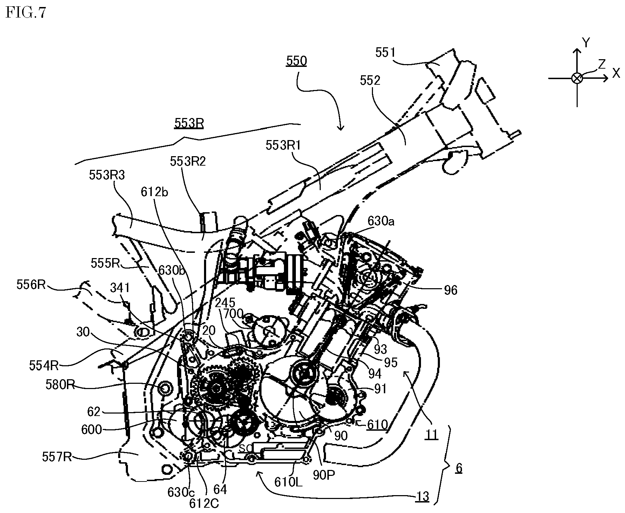

The motorcycle 1 is one example of the straddled vehicle. The motorcycle 1 is a motorcycle of under-bone type. The motorcycle 1 employs an under-bone type frame structure. As shown in FIGs. 3 and 7, the motorcycle 1 includes a vehicle body frame 550. The vehicle body frame 550 includes a head pipe 551, a main pipe frame 552, rear pipe frames 553L and 553R, lower pipe frames 554L and 554R, reinforcement members 555L, 555R, 556L, and 556R, and brackets 557L and 557R.

The head pipe 551 rotatably supports a front fork 570 (see FIG. 2). The main pipe frame 552 extends diagonally toward a lower rear side from the head pipe 551. The rear pipe frames 553L and 553R, which constitutes a pair, are respectively disposed on the left and right sides. As shown in FIGs. 3 and 7, the rear pipe frames 553L and 553R are respectively constituted by portions 553L1 and 553R1 extending from the rear end or its vicinity of the main pipe frame 552 diagonally toward a lower rear side, curved portions 553L2 and 553R2 curving from the rear ends of the portions 553L1 and 553R1 diagonally toward an upper rear side, and portions 553L3 and 553R3 extending from the rear ends of the curved portions 553L2 and 553R2 diagonally toward an upper rear side when seen from a lateral side of the vehicle. Although not shown in the drawings, in a plan view of the vehicle, the rear pipe frames 553L and 553R have portions extending rearward from the rear end or its vicinity of the main pipe frame 552 while gradually separating away from each other in the vehicle width direction and then extending in parallel with each other.

The lower pipe frames 554L and 554R, which constitute a pair, are respectively disposed on the left and right sides. The lower pipe frames 554L and 554R extend from the rear ends or their vicinities of the portions 553L1 and 553R1 diagonally toward the lower rear side. The reinforcement members 555L and 555R, which constitute a pair, are respectively disposed on the left and right sides. The reinforcement members 555L and 555R are pipe-shaped members connected to the lower pipe frames 554L and 554R and to the portions 553L3 and 553R3. The reinforcement members 556L and 556R, which constitute a pair, are also respectively disposed on the left and right sides. The reinforcement members 556L and 556R are pipe-shaped members connected to the lower pipe frames 554L and 554R and to the portions 553L3 and 553R3. Portions via which the reinforcement members 556L and 556R are connected to the lower pipe frames 554L and 554R are located below portions via which the reinforcement members 555L and 555R are connected to the lower pipe frames 554L and 554R. Portions via which the reinforcement members 556L and 556R are connected to the portions 553L3 and 553R3 are located in the rear of portions via which the reinforcement members 555L and 555R are connected to the portions 553L3 and 553R3. The brackets 557L and 557R, which constitute a pair, are respectively disposed on the left and right sides. The brackets 557L and 557R extend downward from the rear ends or their vicinities of the lower pipe frames 554L and 554R.

The brackets 557L and 557R support left and right paired swing arms 590 (see FIG. 2) such that the swing arms 590 are rotatable about pivot portions 580L (see FIGs. 2 and 3) and 580R (see FIG. 7). The swing arms 590 are swingably suspended by the vehicle body frame 550 (see FIGs. 3 and 7) via a rear suspension (not shown).

The motorcycle 1 includes a seat 2, a handle 3, a front wheel 4, the rear wheel 5 that is the driving wheel, and an engine unit 6. There is no particular limitation on the driving wheel. Alternatively, the front wheel 4 may be a driving wheel, or the front wheel 4 and the rear wheel 5 may be driving wheels. The engine unit 6 includes the engine 11 and the multistage transmission device 13. The multistage transmission device 13 includes the shift motor 600 and the clutch motor 700. When seen in the vehicle width direction (Z direction), the shift motor 600 and the clutch motor 700 are located in the rear of a rotational axis line 90P of the crankshaft 90 and in front of the rear wheel 5. The shift motor 600 and the clutch motor 700 operate at the time of gear shifting of the motorcycle 1 (i.e., at the time of gear-shifting operation of the multistage transmission device 13). The shift motor 600 and the clutch motor 700 operate under control of an electronic control unit (ECU) (not shown) of the motorcycle 1, for example. The gear-shift timing of the motorcycle 1 may be determined by the rider's manipulating a gear-shifting operation piece provided to the motorcycle 1, for example.

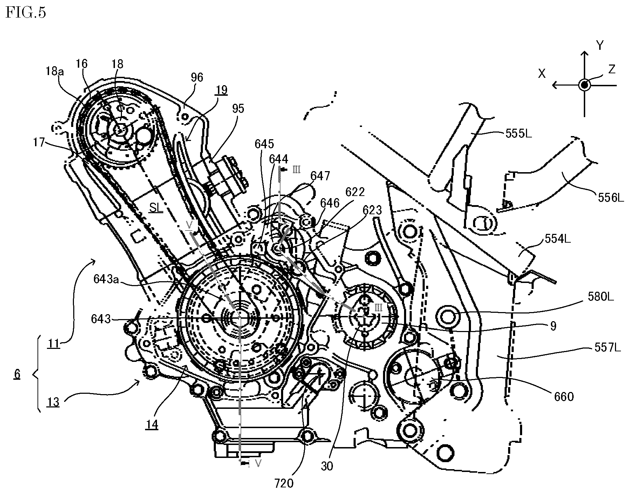

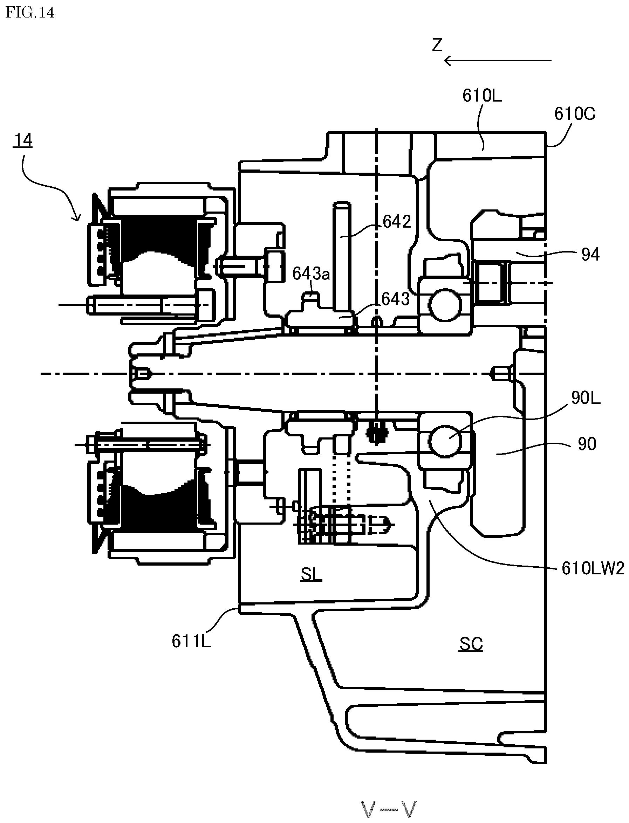

Next, with reference to FIGs. 3 to 14, the following will describe the engine 11 and the multistage transmission device 13 according to the present embodiment. As shown in FIGs. 2 to 5, 7, and 8, the engine unit 6 includes the engine 11 and the multistage transmission device 13. In the engine unit 6, drive power generated by the engine unit 11 is transmitted from the crankshaft 90 to the output shaft 30 (e.g., see FIG. 3) of the multistage transmission device 13. The drive power having reached the output shaft 30 is transmitted to the rear wheel 5 (see FIG. 2) via a drive sprocket 9 (e.g., see FIG. 3), the drive chain 10 (see FIG. 2), and a rear-wheel driving sprocket 5a (see FIG. 2). Consequently, the rear wheel 5 is driven, so that the motorcycle 1 runs.

### [Engine]

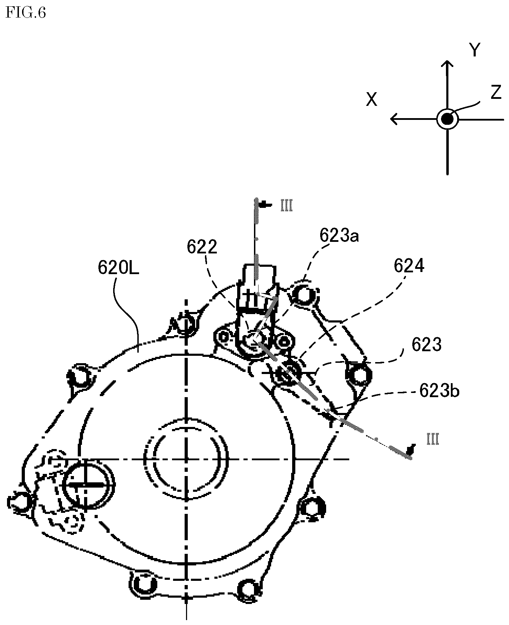

The engine 11 is a single-cylinder engine. The engine is a four-stroke engine. The engine 11 is a water-cooled engine. The engine is a petrol engine. The engine 11 has a displacement of 150 cc, for example. As shown in FIGs. 3 and 7, the engine 11 includes a cylinder head 96, a cylinder body 95, and the crankcase 610. The crankcase 610 is of left-right split type (see FIGs. 10 and 13). As shown in FIG. 13, the crankcase 610 is constituted by a case member 610L, which corresponds to a left half, and a case member 610R, which corresponds to a right half, coupled to each other in the vehicle width direction (Z direction). In FIG. 13, a mating plane 610C between the case members 610L and 610R overlaps the center line CL of the engine 11 in the vehicle width direction. In the vehicle width direction, the crankcase cover 620L is disposed on an outer left side of the crankcase 610 (i.e., outward of the case member 610L) (see FIG. 6). A mating plane 611L between the crankcase 610 and the crankcase cover 620L is located on the left of the mating plane 610C. In the vehicle width direction, the crankcase cover 620R is disposed on an outer right side of the crankcase 610 (i.e., outward of the case member 610R). A mating plane 611R between the crankcase 610 and the crankcase cover 620R is located on the right of the mating plane 610C.

As shown in FIG. 7, the engine 11 is tilted forward such that the cylinder head 96 is positioned in front of and above the cylinder body 95. In the cylinder body 95, a piston 93 is provided in such a manner that the piston 93 can move reciprocatingly between a lower rear side and an upper front side. The piston 93 is connected to a connecting rod 94. The connecting rod 94 is connected to the crankshaft 90. As shown in FIG. 13, the crankshaft 90 is rotatably disposed in a space SC in the crankcase 610 so as to be in parallel with the vehicle width direction (Z direction). The crankshaft 90 is rotatably supported by support walls 610LW1 and 610RW1 of the crankcase 610 via bearings 90L and 90R. The support wall 610LW1 is a portion of the crankcase 610 (case member 610L), the portion being perpendicular to the crankshaft 90. The support wall 610RW1 is a portion of the crankcase 610 (case member 610R), the portion being perpendicular to the crankshaft 90. While the engine 11 is running, the piston 93 moves reciprocatingly in the cylinder body 95, thereby causing the crankshaft 90 to rotate.

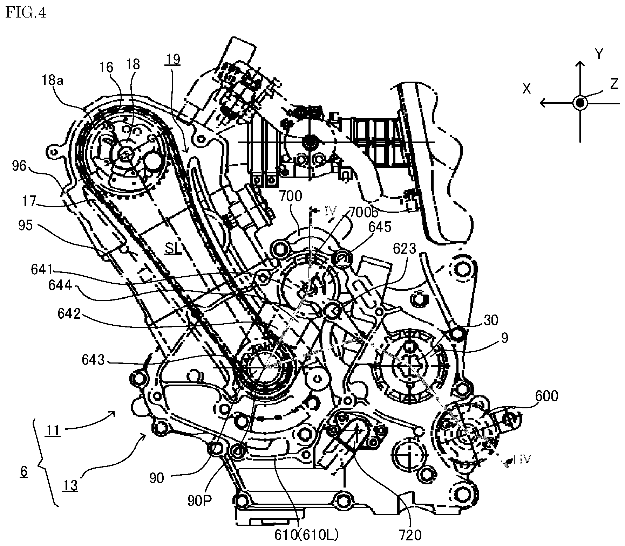

In the cylinder head 96, a cam shaft 18 is rotatably provided (see FIGs. 3 and 4, for example). A cam chain 16 is wound around a cam gear 18a provided to the cam shaft 18 and the crankshaft 90. A cam chain guide 17 and a chain tensioner 19 are provided in the cylinder body 95, the cylinder head 96, and the crankcase 610. The cam chain guide 17 is in contact with a tension side of the cam chain 16. The chain tensioner 19 is in contact with a slack side of the cam chain 16.

The cam gear 18a, the cam chain 16, the cam chain guide 17, and the chain tensioner 19 are disposed in the space SL between the crankcase 610 (case member 610L) and the crankcase cover 620L. The space SL is in the oil environment so as to allow high-speed rotation of the cam gear 18a and the cam chain 16.

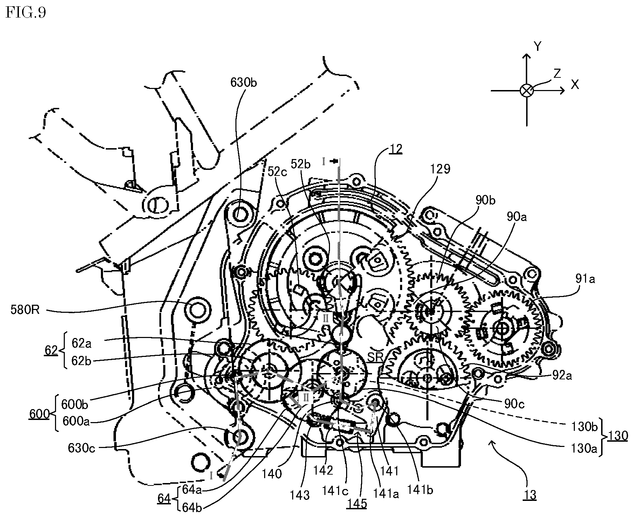

To a right portion of the crankshaft 90 shown in FIG. 13, gears 90a, 90b, and 90c are mounted coaxially to the crankshaft 90 and rotatably together with the crankshaft 90. The gear 90a is engaged with a clutch driving gear 129. The clutch driving gear 129 is mounted to the input shaft 20 such that the clutch driving gear 129 is coaxial to the input shaft 20 and rotatable relative to the input shaft 20 (see FIGs. 9 and 13). The gear 90b is engaged with a counter weight driving gear 91a (see FIG. 9). The counter weight driving gear 91a is provided coaxially to a counter weight 91 (see FIGs. 7 and 8) and rotatably together with the counter weight 91. The gear 90c is engaged with a pump driving gear 92a (see FIG. 9). In conjunction with rotation of the pump driving gear 92a, a pump (not shown) provided in the crankcase 610 operates. To a left end of the crankshaft 90 shown in FIG. 13, a starting generator 14 is provided.

### [Clutch]

To a right end of the input shaft 20 shown in FIGs. 10 and 13, the clutch 12 is mounted. The clutch 12 is a multi-plate wet clutch. The clutch 12 includes a clutch housing 121, a clutch boss 122, a plurality of friction plates 123, a plurality of clutch plates 124, and a pressure plate 125. The clutch 12 includes the clutch driving gear 129. In a state where the clutch is connected, the clutch driving gear 129 transmits, to the input shaft 20, drive power supplied from the crankshaft 90. The clutch housing 121 is configured to rotate together with the clutch driving gear 129. Accordingly, the clutch housing 121 rotates together with the crankshaft 90.

The clutch housing 121 is shaped in a bottomed cylinder. The clutch housing 121 is provided coaxially to the input shaft 20 and rotatably relative to the input shaft 20. The clutch housing 121 has an inner peripheral surface provided with the plurality of friction plates 123 provided in a standing manner to extend toward a radially inner side of the clutch housing 121. The plurality of friction plates 123 are arranged at intervals in an axial direction of the input shaft 20.

The clutch boss 122 has a tubular shape. The clutch boss 122 is disposed at a location inward of the clutch housing 121 in a radial direction of the input shaft 20. The clutch boss 122 rotates together with the input shaft 20. The clutch boss 122 has an outer peripheral surface provided with the plurality of clutch plates 124 provided in a standing manner to extend toward a radially outer side of the clutch boss 122. The plurality of clutch plates 124 are arranged at intervals in the axial direction of the input shaft 20. Each of the friction plates 123 and the clutch plates 124 are arranged alternately in the axial direction of the input shaft 20.

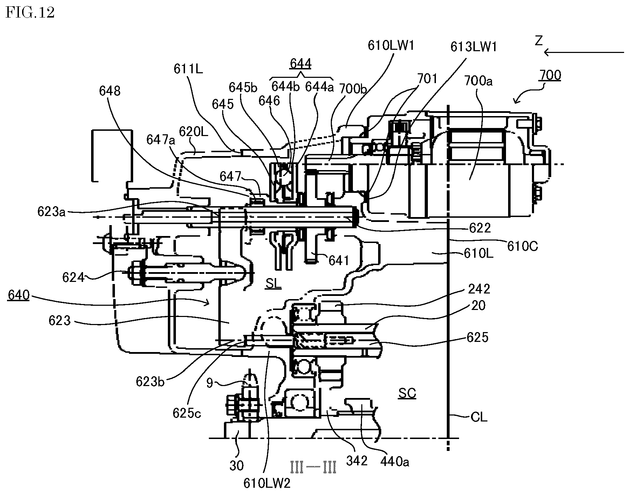

The pressure plate 125 is spaced from the clutch boss 122 in the axial direction of the input shaft 20. The pressure plate 125 is biased toward the clutch boss 122 (in the left direction in FIGs. 10 and 13) by a clutch spring 125a. When the pressure plate 125 causes the friction plates 123 and the clutch plates 124 to press each other upon reception of the biasing force of the clutch spring 125a, the clutch 12 is connected. Meanwhile, when the pressure plate 125 causes the friction plates 123 and the clutch plates 124 to separate from each other against the biasing force of the clutch spring 125a, the clutch 12 is disconnected. The operation of the pressure plate 125 is controlled by the operation power outputted from the clutch motor 700 and transmitted via the operation power transmission mechanism 640 (see FIGs. 12 and 13).

The clutch 12 is disposed in a space SR between the crankcase 610 (case member 610R) and the crankcase cover 620R. The space SR is supplied with engine oil, since the clutch 12, which is a multi-plate wet clutch, is disposed in the space SR. The space SR is in the oil environment.

### [Clutch Motor]

The clutch motor 700 includes the body part 700a and the shaft part 700b (see FIGs. 12 and 13, for example). The body part 700a includes a stator and a rotor (not shown). For example, in the clutch motor 700, either one of the stator and the rotor includes a permanent magnet (not shown). The shaft part 700b rotatably protrudes from the body part 700a. The shaft part 700b is configured to output operation power by rotation. The operation power from the clutch motor 700 is used to connect or disconnect the clutch 12. The clutch motor 700 is configured such that the shaft part 700b rotates in such a manner that a rotation direction of the shaft part 700b for connection of the clutch 12 and a rotation direction of the shaft part 700b for disconnection of the clutch 12 are opposite to each other. The clutch motor 700 is supported by the crankcase 610 (case member 610L) such that the shaft part 700b is located in the space SL between the crankcase 610 (case member 610L) and the crankcase cover 620L. The shaft part 700b is in parallel with the crankshaft 90. The clutch motor 700 is disposed such that the body part 700a overlaps a plane including the mating plane 610C of the crankcase 610. The plane overlaps the center line CL. As shown in FIGs. 7 and 8, the clutch motor 700 is located above both the input shaft 20 and the output shaft 30 in the top-bottom direction (Y direction). When seen in the vehicle width direction (Z direction), the clutch motor 700 is disposed such that the shaft part 700b is located between the rotational axis line 90P of the crankshaft 90 and the output shaft 30 in the front-rear direction (X direction) (see FIG. 4). The clutch motor 700 is disposed so as to be at least partially identical in height to the cylinder body 95. The clutch motor 700 is disposed so as to be at least partially overlap the crankshaft 90.

### [Operation Power Transmission Mechanism]

As shown in FIGs. 12 and 13, the operation power transmission mechanism 640 is configured to transmit, to the clutch 12, the operation power outputted from the clutch motor 700. The operation power transmission mechanism 640 includes a support shaft 622, a gear 641, a partial circumferential gear 642, a collar 643, a first relative rotation part 644, a second relative rotation part 645, a ball 646, a collar 647, a seesaw part 623, a support pin 624, a push rod 625, a ball 625a, and a connection member 626. The operation power transmission mechanism 640 has a part (i.e., the support shaft 622, the gear 641, the partial circumferential gear 642, the collar 643, the first relative rotation part 644, the second relative rotation part 645, the ball 646, the collar 647, and the seesaw part 623) included in the space SL between the crankcase 610 and the crankcase cover 620L.

The support shaft 622 is supported by the crankcase 610 (case member 610L) and the crankcase cover 620L so as to be in parallel with the shaft part 700b in the space SL. The gear 641 is rotatably supported by the support shaft 622 so as to be engaged with the shaft part 700b of the clutch motor 700. As shown in FIGs. 4 and 13, the partial circumferential gear 642 is fixed to the collar 643, which is provided to the outer periphery of the crankshaft 90, such that the partial circumferential gear 642 is engaged with the gear 641 and is rotatable relative to the crankshaft 90.

The collar 643 is rotatable relative to the crankshaft 90 (see FIG. 13). The partial circumferential gear 642 and the collar 643 are configured to be rotatable relative to the crankshaft 90. The partial circumferential gear 642 and the collar 643 rotate in response to rotation of the gear 641. As shown in FIG. 4, only a part of the outer periphery of the partial circumferential gear 642 is engaged with the gear 641. In this way, spacing saving is planned. The collar 643 includes a gear part 643a having a diameter smaller than a diameter of the partial circumferential gear 642. That is, the collar 643 functions as a two-stage gear including the partial circumferential gear 642 having a large diameter and the gear part 643a having a small diameter.

The first relative rotation part 644 includes a partial circumferential gear part 644a shown in FIGs. 4, 5, and 13, and a ball retaining part 644b shown in FIG. 12. As shown in FIG. 13, the partial circumferential gear part 644a is engaged with the gear part 643a of the collar 643. As described above, the operation power transmission mechanism 640 includes a reduction gear mechanism for improving a torque. The reduction gear mechanism is located in the space SL. The ball retaining part 644b retains the ball 646 in such a manner that the ball 646 is sandwiched between the ball retaining part 644b and a ball retaining part 645b of the second relative rotation part 645, which will be described later.

The second relative rotation part 645 includes the ball retaining part 645b shown in FIG. 12. The second relative rotation part 645 is fixed to the outer periphery of the collar 647, which is provided to the outer periphery of the support shaft 622. The collar 647 is a tubular member provided to the support shaft 622 in such a manner that the collar 647 is slidable in an axial direction of the support shaft 622. The second relative rotation part 645 is movable in the axial direction of the support shaft 622 together with the collar 647. The first relative rotation part 644 is provided to the outer periphery of the collar 647, but is not fixed thereto. When the first relative rotation part 644 rotates in response to the operation power transmitted from the partial circumferential gear part 644a, the second relative rotation part 645 and the collar 647 do not rotate. Consequently, the first relative rotation part 644 and the second relative rotation part 645 rotate relative to each other with the ball 646 interposed therebetween. The ball retaining parts 644b and 645b are shaped to cause, as a result of the relative rotation, the second relative rotation part 645 to move in the axial direction of the support shaft 622 to change a distance between the first relative rotation part 644 and the second relative rotation part 645. When the second relative rotation part 645 moves in the axial direction of the support shaft 622 together with the collar 647, the first relative rotation part 644 does not move.

FIG. 12 shows a state where the first relative rotation part 644 and the second relative rotation part 645 are apart from each other by the shortest distance. When the second relative rotation part 645 moves in a direction (the left direction in the drawings) away from the first relative rotation part 644 as a result of the relative rotation, an abutting portion 648 provided to a distal end of the collar 647 in the direction of the movement pushes a first end 623a (an upper end in the drawings) of the seesaw part 623 in the direction of the movement. The abutting portion 648 is an annular plate-shaped member disposed to surround the outer periphery of the support shaft 622. Between the collar 647 and the abutting portion 648, a spring 647a is provided in such a manner that the spring 647a is wound around the outer periphery of the support shaft 622. The spring 647a biases the abutting portion 648 by pushing the abutting portion 648 onto the first end 623a of the seesaw part 623.

As shown in FIGs. 6 and 12, the seesaw part 623 is supported by the support pin 624 such that the seesaw part 623 is swingable in the vehicle width direction (Z direction) in the space SL with a distal end of the support pin 624 as a fulcrum. The support pin 624 is supported by the crankcase cover 620L such that the support pin 624 protrudes into the space SL, as shown in FIG. 12. Referring to FIG. 12, when the abutting portion 648 pushes the first end 623a of the seesaw part 623 to the left, the seesaw part 623 swings, whereby a second end 623b of the seesaw part 623 pushes the push rod 625 to the right.

As shown in FIG. 13, the push rod 625 is disposed in a void being formed inside the input shaft 20 and extending in the vehicle width direction (Z direction), in such a manner that the push rod 625 is movable reciprocatingly in the vehicle width direction. A left end 625c of the push rod 625 shown in FIG. 13 protrudes from the input shaft 20 in the vehicle width direction (Z direction) such that the left end 625c is positioned in the space SL. A right end 625b of the push rod 625 faces a left end 626b of the connection member 616 such that a ball 625a is interposed between the right end 625b of the push rod 625 and the left end 626b of the connection member 626. The ball 625a is movable in the vehicle width direction together with the push rod 625 and the connection member 626. The connection member 626 is a bar-shaped member whose longitudinal direction is in parallel with the vehicle width direction. The left end of the connection member 626 is inserted into the void being formed inside the input shaft 20 and extending in the vehicle width direction, in such a manner that the left end of the connection member 626 is movable reciprocatingly in the vehicle width direction. A right end 626a of the connection member 626 is inserted into a hole in a radial center of the pressure plate 125 so as to be supported thereby. The connection member 626 and the pressure plate 125 are rotatable relative to each other.

Now, see FIG. 13. When the push rod 625 is pushed by swinging of the seesaw part 623, the resulting pushing force pushes the pressure plate 125 via the push rod 625, the ball 625a, and the connection member 626. Consequently, the pressure plate 125 moves in a direction away from the clutch boss 122 (the right direction in the drawings) against the biasing force of the clutch spring 125a. Accordingly, the pressure plate 125 loses the force for causing the friction plates 123 and the clutch plates 124 to press each other. As a result, the clutch 12 is disconnected. In a state where the clutch 12 is disconnected, the drive power from the crankshaft 90 is not inputted to the input shaft 20. Meanwhile, when the pushing pressure of the push rod 625 is released by swinging of the seesaw part 623, the push rod 625 moves toward the seesaw part 623 by the biasing force of the clutch spring 125a. Consequently, the pressure plate 125 moves toward the clutch boss 122. Accordingly, the pressure plate 125 causes the friction plates 123 and the clutch plates 124 to press each other. As a result, the clutch 12 is connected. In a state where the clutch 12 is connected, the drive power from the crankshaft 90 is inputted to the input shaft 20 via the clutch 12.

As described above, in the operation power transmission mechanism 640, the operation power from the clutch motor 700 is transmitted to the collar 643, which is provided to the outer periphery of the crankshaft 90, via the gear 641 provided to the support shaft 622, whereby the collar 643 rotates. The rotation of the collar 643 is transmitted to the first relative rotation part 644, which is provided to the support shaft 622. A path for transmitting operation power goes back and forth between the support shaft 622 and the crankshaft 90. In the present embodiment, the operation power transmission mechanism 640 is configured such that, in the space SL, the path for transmitting the operation power extends from the shaft part 700b of the clutch motor 700 toward the crankshaft 90 and extends back toward approach the shaft part 700b. As the path for transmitting the operation power, a relatively long path can be secured in a compact manner. The operation power transmission mechanism 640 includes a mechanism that is disposed in the space SL and that is configured to convert a rotational motion of the clutch motor 700 into a reciprocating motion for connecting or disconnecting the clutch 12.

The operation power transmission mechanism 640 pushes, with the push rod 625, the pressure plate 125 of the clutch 12 outwardly from a center in the vehicle width direction. In the present embodiment, the operation power transmission mechanism 640 may be partially disposed in the space between the crankcase 610L and the crankcase cover 620L so as to push pressure plate 125 of the clutch 12 outwardly from the inside of the clutch 12. With this configuration, it is possible to prevent or reduce the protrusion of the engine unit in the vehicle width direction, even without disposing the operation power transmission mechanism outside the clutch 12. Consequently, the multistage transmission device 13 can be disposed in a compact manner.

### [Multistage Transmission device]

As shown in FIGs. 10 and 13, the input shaft 20 is rotatably supported by the support walls 610LW1 and 610RW1 of the crankcase 610 via bearings 20L and 20R. As shown in FIGs. 7 and 8, the input shaft 20 is positioned above the rotational axis line 90P of the crankshaft 90 in the top-bottom direction (Y direction). In the front-rear direction, the input shaft 20 is positioned in the rear of the rotational axis line 90P of the crankshaft 90. As shown in FIG. 13, the input shaft 20 is disposed in parallel with the crankshaft 90. The input shaft 20 is provided with the plurality of (five) driving gears 241 to 245 (see FIGs. 10 and 13). The plurality of driving gears 241 to 245 are arranged in the following order from the left in FIG. 13: 242 - 243 - 244 - 245 - 241. The first-speed driving gear 241 and the second-speed driving gear 242 are integrated with the input shaft 20. The third-speed driving gear 243 and the fourth-speed driving gear 244, which are in parallel with the input shaft 20, are integrated with each other so as to constitute a slider 440b. The slider 440b is provided to the input shaft 20 by spline-fitting so as to be movable in a direction (Z direction) parallel with the input shaft 20. The slider 440b has an engagement groove 440bG that is located at a location between the third-speed driving gear 243 and the fourth-speed driving gear 244 and that extends around an entire circumference of the slider 440b in a circumferential direction. The fourth-speed driving gear 244 has a side surface that faces the fifth-speed driving gear 245 and that has a dog element 440aR engageable with a side-surface recess 245a of the fifth-speed driving gear 245. The fifth-speed driving gear 245 is provided to the input shaft 20 rotatably relative to the input shaft 20. When the slider 440b moves in the right direction in the drawings and consequently the dog element 440aR is engaged with the side-surface recess 245a, the fifth-speed driving gear 245 rotates in conjunction with the input shaft 20 together with the slider 440b.

As shown in FIG. 13, the output shaft 30 is rotatably supported by the support walls 610LW2 and 610RW2 of the crankcase 610 via bearings 30L and 30R. In the vehicle width direction (Z direction), a distance between the support walls 610LW2 and 610RW2 is longer than a distance between the support walls 610LW1 and 610RW1.

As shown in FIG. 10, the shift motor 600 is supported by the support wall 610RW2, which supports the input shaft 20 and the output shaft 30. The support wall 610RW2 has the inside surface 613RW2. The inside surface 613RW2 faces the center line CL in the vehicle width direction (Z direction). The inside surface 613RW2 corresponds to the above-described first inside surface. The body part 600a of the shift motor 600 is mounted to the inside surface 613RW2 such that the shaft part 600b extends outwardly in the vehicle width direction from the body part 600a. Between the body part 600a of the shift motor 600 and the inside surface 613RW2 of the support wall 610RW2, a heat-resistant vibration control member 601 is provided. The heat-resistant vibration control member 601 is in contact with both the body part 600a and the inside surface 613RW2. The heat-resistant vibration control member 601 is an annular plate-shaped member that is radially spaced from the shaft part 600b and circumferentially surrounds the shaft part 600b. The heat-resistant vibration control member 601 is made of a heat-resistant vibration-control rubber, for example.

As shown in FIG. 12, the clutch motor 700 is supported by the support wall 610LW1, which supports the crankshaft 90. The support wall 610LW1 has the inside surface 613LW1. The inside surface 613LW1 faces the center line CL in the vehicle width direction (Z direction). The inside surface 613LW1 corresponds to the above-described second inside surface. The body part 700a of the clutch motor 700 is mounted to the inside surface 613LW1 such that the shaft part 700b extends outwardly in the vehicle width direction from the body part 700a. Between the body part 700a of the clutch motor 700 and the inside surface 613LW1 of the support wall 610LW1, a heat-resistant vibration control member 701 is provided. The heat-resistant vibration control member 701 is in contact with both the body part 700a and the inside surface 613LW1. The heat-resistant vibration control member 701 is an annular plate-shaped member that is radially spaced from the shaft part 700b and circumferentially 701 is made of a heat-resistant vibration-control rubber, for example.

In the present embodiment, the shift motor 600 is supported by the support wall 610RW2 of the crankcase 610R. Meanwhile, the clutch motor 700 is supported by the support wall 610LW1 of the crankcase 610L, which is not the crankcase 610R. The shaft part 600b of the shift motor 600 and the shaft part 700b of the clutch motor 700 extend toward opposite sides in the vehicle width direction. Thus, the motor installation position of the shift motor 600 and the motor installation position of the clutch motor 700 do not overlap each other in the front-rear direction and the top-bottom direction. That is, the motor installation positions can be dispersed. In addition, two motors, specifically, the shift motor 600 and the clutch motor 700 are respectively installed to the left and right parts of the left-right split type crankcase in a dispersed manner. Thus, protrusion of the motor installation positions in these parts of the crankcase can be prevented or reduced. Consequently, the multistage transmission device 13 including the shift motor 600 and the clutch motor 700 can be disposed in a compact manner as a whole.

As shown in FIGs. 7 and 8, the output shaft 30 is positioned below the input shaft 20 in the top-bottom direction (Y direction). In the front-rear direction, the output shaft 30 is positioned in rear of the input shaft 20. The input shaft 20, which is provided with the clutch 12, is positioned above the crankshaft 90 and the output shaft 30.

As shown in FIG. 13, the output shaft 30 is positioned in parallel with the crankshaft 90. The output shaft 30 is provided with the plurality of (five) driven gears 341 to 345 (see FIG. 13). The plurality of driven gears 341 to 345 are disposed to be engaged with their corresponding driving gears 241 to 245. The first-speed driven gear 341 to the fourth-speed driven gear 344 are mounted to the output shaft 30 rotatably relative to the output shaft 30.

Between the second-speed driven gear 342 and the third-speed driven gear 343, a slider 440a is provided. The slider 440a is provided to the output shaft 30 by spline-fitting so as to be movable in the direction (Z direction) parallel with the output shaft 30. The slider 440a has an engagement groove 440aG extending around an entire circumference of the slider 440a in a circumferential direction. The slider 440a has a side surface that faces the second-speed driven gear 342 and that has a dog element 440aL engageable with a side-surface recess 342a of the second-speed driven gear 342. When the slider 440a moves in the left direction in the drawings and consequently the dog 440a moves in the left direction in the drawings and consequently the dog element 440aL is engaged with the side-surface recess 342a, the second-speed driven gear 342 rotates in conjunction with the output shaft 30 together with the slider 440a. The slider 440a has a side surface that faces the third-speed driven gear 343 and that has a dog element 440aR engageable with a side-surface recess 343a of the third-speed driven gear 343. When the slider 440a moves in the right direction in the drawings and consequently the dog element 440aR is engaged with the side-surface recess 343a, the third-speed driven gear 343 rotates in conjunction with the output shaft 30 together with the slider 440a.

Between the fourth-speed driven gear 344 and the first-speed driven gear 341, a slider 440c designed to include the fifth-speed driven gear 345 is provided. The slider 440c is provided to the output shaft 30 by spline-fitting so as to be movable in the direction parallel with the output shaft 30. The slider 440c has an engagement groove 440cG extending around an entire circumference of the slider 440c in a circumferential direction. The slider 440c has a side surface facing the fourth-speed driven gear 344 and having a dog element 440cL engageable with a side-surface recess 344a of the fourth-speed driven gear 344. When the slider 440c moves in the left direction in the drawings so that the dog element 440cL is engaged with the side-surface recess 344a, the fourth-speed driven gear 344 rotates in conjunction with the output shaft 30 together with the slider 440c. The slider 440c has a side surface facing the first-speed driven gear 341 and having a dog element 440cR engageable with a side-surface recess 341a of the first-speed driven gear 341. When the slider moves in the right direction in the drawings and consequently the dog element 440cR is engaged with the side-surface recess 341a, the first-speed driven gear 341 rotates in conjunction with the output shaft 30 together with the slider 440c.

As a result of the movement of each of the sliders 440a to 440c along the input shaft 20 or the output shaft 30 in the left-right direction in the drawings, a gear stage is set. As shown in FIG. 13, when the sliders 440a to 440c are respectively positioned at "neutral", "neutral", and "neutral", the multistage transmission device 13 is set at a neutral position. When the sliders 440a to 440c are respectively positioned at "neutral", "neutral", and "right", the multistage transmission device 13 is set at the first speed. When the sliders 440a to 440c are respectively positioned at "left", "neutral", and "neutral", the multistage transmission device 13 is set at the second speed. When the sliders 440a to 440c are respectively positioned at "right", "neutral", and "neutral", the multistage transmission device 13 is set at the third speed. When the sliders 440a to 440c are respectively positioned at "neutral", "neutral", and "left", the multistage transmission device 13 is set at the fourth speed. When the sliders 440a to 440c are respectively positioned at "neutral", "right", and "neutral", the multistage transmission device 13 is set at the fifth speed. The "neutral" corresponds to the neutral position (the position shown in FIG. 13). The "right" corresponds to the position at which the dog element of a corresponding one of the sliders having moved from the neutral position to the right is engaged with a corresponding one of the side-surface recesses. The "left" corresponds to the position at which the dog element of a corresponding one of the sliders having moved from the neutral position to the left is engaged with a corresponding one of the side-surface recesses.

The output shaft 30 has a first end 30a that penetrates through the bearing 30L and protrudes to the outside of the crankcase 610. The first end 30a of the output shaft 30 is provided with the drive sprocket 9. As described above, the drive power transmitted to the output shaft 30 is transmitted to the rear wheel 5 (see FIG. 2), which is the driving wheel.

Operations of the sliders 440a to 440c for setting a gear stage are controlled by the shift motor 600. By the shift motor 600, the slider 440b, which is provided to the input shaft 20, and the sliders 440a and 440c, which are provided to the output shaft 30, are operated. Targets that are to be operated by the shift motor 600 are provided to the input shaft 20 or the output shaft 30.

### [Shift Motor]

The shift motor 600 includes the body part 600a shaped in a bottomed cylinder and the shaft part 600b (see FIGs. 10 and 13 for example). The body part 600a includes a stator and a rotor. For example, in the shift motor 600, either one of the stator and the rotor includes a permanent magnet. The shaft part 600b rotatably protrudes from the body part 600a. The shaft part 600b is configured to output operation power by rotation. The shift motor 600 is configured to cause the shaft part 600b for up-shifting or down-shifting such that a rotation direction of the shaft part 600b for up-shifting and a rotation direction of the shaft part 600b for down-shifting are opposite to each other. The shift motor 600 satisfies all of (A) to (C) below.
(A) The shaft part 600b is in parallel with or substantially in parallel with the input shaft 20, the output shaft 30, and the shaft 50S (see FIG. 10) of the shift cam 50. The expression "substantially" herein means that a tolerance or a manufacturing error is permitted. These shafts are in parallel with the vehicle width direction (Z direction), for example.
(B) In the vehicle width direction, the body part 600a is at least partially located inward of the outside surfaces 620LS and 620RS of the crankcase covers 620L and 620R. The expression "inward" means a position that is closer to the center line CL in the vehicle width direction.

Here, portions of the outer side surfaces 620LS and 620RS of the crankcase covers 620L and 620R that are to be compared in location with the body part 600a are "outermost portions in the vehicle width direction", for example. Focusing on the right side of the vehicle, the "outermost portion in the vehicle width direction" of the outer side surface 620RS is a portion that is located outward of the clutch 12 and side by side with the clutch 12 in the vehicle width direction, as shown in FIG. 13. The body part 600a is closer to the center line CL than is the portion when seen in the vehicle width direction. Focusing on the left side of the vehicle, the "outermost portion in the vehicle width direction" of the outer side surface 620LS is a portion that is located side by side with the starting generator 14 in the vehicle width direction, as shown in FIG. 13. The body part 600a is closer to the center line CL than is the portion when seen in the vehicle width direction. As described above, the motorcycle 1 according to the present embodiment is configured such that both of the left and right parts of the vehicle satisfy the requirement (B). Alternatively, the motorcycle 1 may be configured such that either one of the left and right parts of the vehicle satisfies the requirement (B).

The portions of the outer side surfaces 620LS and 620RS of the crankcase covers 620L and 620R that are to be compared in location with the body part 600a may alternatively be "portions that are located side by side with or overlap the body part 600a in the vehicle width direction". In the present embodiment, focusing on the right part of the vehicle, the body part 600a is closer to the center line CL than is the "portion that is located side by side with or overlaps the body part 600a in the vehicle width direction" of the outer side surface 620RS, as shown in FIG. 13.

As the condition (B) described above, the following condition may alternatively be adopted. The shift motor 600 may be disposed such that the body part 600a is at least partially located inward of the mating plane 611L between the crankcase 610 and the crankcase cover 620L and the mating plane 611R between the crankcase 610 and the crankcase cover 620R. This requirement may be applied to only one of the left and right parts of the vehicle or both of the left and right parts of the vehicle. The shift motor 600 may be disposed such that the body part 600a overlaps the mating plane 610C. The shift motor 600 may be disposed such that the whole of the body part 600a is positioned between the mating planes 611L and 611R in the vehicle width direction. Consequently, it is possible to prevent or reduce protrusion of the shift motor 600 in the vehicle width direction more effectively.

(C) The shaft part 600b is located in the rear of the output shaft 30 in the front-rear direction (X direction), when seen in the vehicle width direction (see FIG. 8, for example). The output shaft 30 is located between the shaft part 600b and the shaft 50S of the shift cam 50. The shaft 50S of the shift cam 50 is located in front of the output shaft 30. By satisfying (C) as well as (A) and (B), the excellent effect of the downsizing of the multistage transmission device 13 can be attained.

According to the present embodiment, the crankcase 610 has, in its inside, the space SC having an upper rear portion in which the output shaft 30 and the driven gears 341 to 345 are accommodated, as shown in FIGs. 7 and 8. For this purpose, the crankcase 610 itself has a profile (contour) defining the space SC whose upper rear portion protrudes further rearward than is the lower rear portion of the space SC. Protruding portions 612b and 612c, which will be described later, are formed outside the space SC so that the engine unit 6 is suspended from the protruding portions 612b and 612c. The protruding portions 612b and 612c are not protrusions of the case itself, and do not affect the profile of the case. In the front-rear direction (X direction), the body part 600a of the shift motor 600 is disposed to overlap the lower rear portion of the space SC. The body part 600a of the shift motor 600 is disposed in the rear of the lower rear portion of the space SC, rather than in the rear of the upper rear portion of the space SC.

As shown in FIGs. 7 and 8, the protruding portions 612b and 612c of the crankcase 610 are located outside the space SC of the crankcase 610. The protruding portion 612b protrudes from an upper rear part of the crankcase 610 toward an upper rear side outside the space SC. The protruding portion 612b has a distal end provided with an engine suspending portion 630b. The protrusion 612c protrudes from a lower rear part of the crankcase 610 toward a lower rear side outside the space SC. The protrusion 612c has a distal end provided with an engine suspending portion 630c. The cylinder head 96 has an upper rear portion provided with an engine suspending portion 630a. The engine unit 6 is suspended from the vehicle body frame 550 via the engine suspending portions 630a to 630c. The crankcase 610 has the two engine suspending portions 630b and 630c. The two engine suspending portions 630b and 630c are disposed at different positions in the top-bottom direction (Y direction). In the present embodiment, the two engine suspending portions 630b and 630c are disposed so as to at least partially overlap each other in the top-bottom direction.

The shift motor 600 is disposed such that the body part 600a is at least partially located between the two engine suspending portions 630b and 630c in the top-bottom direction (Y direction). The body part 600a at least partially overlaps the two engine suspending portions 630b and 630c in the top-bottom direction. When seen in the vehicle width direction (Z direction), the body part 600a at least partially overlaps a straight line passing through the two engine suspending portions 630b and 630c. The shift motor 600 is disposed along a profile of a rear portion of the crankcase 610 itself. With this configuration, it is possible to prevent or reduce the shift motor 600 from protruding greatly outwardly. It is possible to prevent or reduce upsizing of the exterior shape of the engine 11. The crankcase 610 does not have a recess where the shift motor 600 can be stored. Since the shift motor 600 is not stored in the recess, the shift motor 600 is easily cooled, and therefore an increase in temperature of the shift motor 600 can be prevented or reduced. A side surface (left side surface) of the shift motor 600 in the vehicle width direction (Z direction) is not covered with any constituent member of the engine 11 itself, but is exposed (see FIGs. 4, 5, 10, and 13). The movable elements which constitutes the engine 11 are not disposed on an axial line of the shift motor 600. The movable elements may be rotating elements. Examples of the rotating elements encompass the clutch 12, the driving gears 241 to 245, and the driven gears 341 to 345. Note that the drive chain 10 for transmitting drive power to the rear wheel 5 is not included in the movable elements of the engine 11.

In the present embodiment, both the shift motor 600 and the shift cam 50 are disposed in an area (lower area) below the output shaft 30 in the top-bottom direction. That is, in the top-bottom direction (Y direction), the shaft part 600b and the shaft 50S of the shift cam 50 are located below the input shaft 20 and the output shaft 30 when seen in the vehicle width direction (see FIG. 8, for example). The output shaft 30 is located between the shaft part 600b and the shaft 50S of the shift cam 50. The layout of the shift motor and the shift cam is not limited to the example shown in the embodiment.

As shown in FIG. 9, the shift motor 600 is disposed such that a gap exists between the shift motor 600 and the clutch 12 when seen in the vehicle width direction (Z direction). In other words, the shift motor 600 is disposed so as not to overlap the clutch 12 in the radial direction. As shown in FIG. 9, the clutch 12 has a circular shape as a whole view when seen in the vehicle width direction (Z direction). When seen in the vehicle width direction, the clutch 12 is a relatively large element among the constituent elements of the engine 11. For example, the clutch 12 is greater in diameter than the maximum-speed driving gear 245 among the driving gears 241 to 245 for all gear stages (see FIG. 13). The clutch 12 is greater in diameter than the minimum-speed driven gear 341 of the driven gears 341 to 345 for all gear stages (see FIG. 13). Thus, a long distance is secured between the shift motor 600 and the input shaft 20, a long distance is secured between the shift motor 600 and the output shaft 30, and a long distance is secured between the shift motor 600 and the crankshaft 90. According to the motorcycle 1, the multistage transmission device 13 can be disposed in a compact manner as a whole, and long distances can be secured between the shift motor 600 and the shafts.

The shift motor 600 causes the sliders 440a to 440c to operate via a dog engagement mechanism 70 (see FIGs. 10 and 13). The dog engagement mechanism 70 includes idle gears 62 and 64, an index cam 130, the shift cam 50, shift forks 53a to 53c, and a folk guide shaft 60.

As shown in FIG. 10, the idle gear 62 is a two-stage gear constituted by a large-diameter gear 62a and a small-diameter gear 62b. The idle gear 64 is a two-stage gear constituted by a large-diameter gear 64a and a small-diameter gear 64b. The idle gears 62 and 64 are rotatably supported by the crankcase 610 (case member 610R) and the crankcase cover 620R such that rotational axis lines of the idle gears 62 and 64 are in parallel with the vehicle width direction (Z direction). The idle gears 62 and 64 are rotatably provided in the space SR between the crankcase 610 (case member 610R) and the crankcase cover 620R. The shaft part 600b of the shift motor 600 is engaged with the large-diameter gear 62a of the idle gear 62. The small-diameter gear 62b of the idle gear 62 is engaged with the large-diameter gear 64a of the idle gear 64. The small-diameter gear 64b of the idle gear 64 is engaged with a gear part 130a of the index cam 130. Thus, the idle gears 62 and 64 function as reduction gears. In the present embodiment, a relatively long distance can be secured between the shaft part 600b of the shift motor 600 and the shaft 50S of the shift cam 50 in their radial directions. Specifically, the shaft 50S can be disposed in front of the output shaft 30, and the shaft part 600b can be disposed in the rear of the output shaft 30.

As shown in FIG. 10, the index cam 130 is fixed to a first end (the right end in the drawings) of the shift cam 50 coaxially to the shift cam 50. The first end of the shift cam 50 is rotatably supported by the crankcase 610 (case member 610R) via the bearing 50R. A second end (the left end in the drawings) of the shift cam 50 is rotatably supported by the crankcase 610 (case member 610L). The shift cam 50 rotates in conjunction with the index cam 130 with its rotational axis line being in parallel with the vehicle width direction (Z direction). The second end of the shift cam 50 is provided with a detected shaft 50a, which is coaxial to the shift cam 50. The crankcase 610 is provided with a shift-cam phase sensor 720, which is disposed at a location away from the second end of the shift cam 50 in the axial direction of the shift cam 50. The shift-cam phase sensor 720 is configured to detect a phase (a rotational position in a circumferential direction) of the shift cam 50 by detecting the detected shaft 50a. As shown in FIGs. 9 to 11, the index cam 130 includes the gear part 130a having a disk-like shape and a star-shaped part 130b having a star-like shape. The gear part 130a and the star-shaped part 130b are fixed so as to be adjacent to each other in the vehicle width direction. The star-shaped part 130b has a radial outer peripheral surface having protrusions and recesses that are arranged continuously in the circumferential direction and that define a concave and convex shape in the radial direction. Multiple (six) recesses (see FIG. 9) constituting recessed parts of the concave and convex shape function as the gear stage positions of the shift cam 50 for the gear stages, respectively. The gear stage positions are associated with the gear positions, respectively. In the present embodiment, the multistage transmission device 13 is a bottom-neutral type five-speed transmission device. The multistage transmission device 13 has five gear stages in addition to the neutral position.

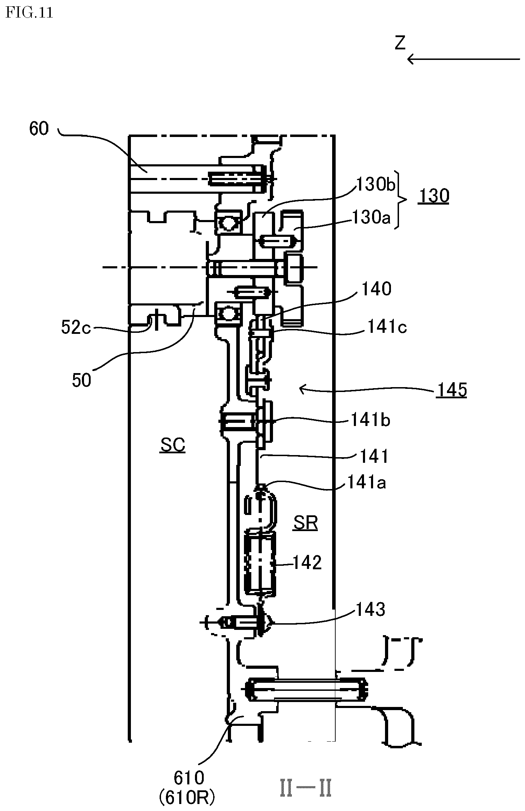

As shown in FIGs. 9 and 11, a phase holding mechanism (position holding mechanism) 145 is provided at a location outward of the star-shaped part 130b of the index cam 130 in a radial direction of the index cam 130. The phase holding mechanism 145 is a mechanism for holding a phase of the index cam 130. While gear shifting is not performed, the phase holding mechanism 145 holds the index cam 130 at a phase defined by its corresponding certain rotation angle, i.e., at a gear stage position described above. While the index cam 130 is held, the shift cam 50 is also held. As shown in FIGs. 9 and 11, the phase holding mechanism 145 includes a roller 140, a retainer 141, a spring 142, and a latched part 143.

The roller 140 is supported by a shaft 141c of the retainer 141 in such a manner that the roller 140 permits rotation of the star-shaped part 130b while being in contact with the star-shaped part 130b. As shown in FIG. 9, the retainer 141 is a flat-plate shaped member having a hole 141a, a shaft 141b, and a shaft 141c arranged in a triangle when seen in the vehicle width direction (Z direction). The retainer 141 is supported by the shaft 141b so as to be rotatable relative to the crankcase 610 (case member 610R). The spring 142 is hooked at the hole 141a of the retainer 141 and the latched part 143 so that the spring 142 generates a pulling force. The pulling force generated by the spring 142 causes the retainer 141 to revolve about the shaft 141b. Consequently, the roller 140, which is supported rotatably by the shaft 141c of the retainer 141, is biased toward the star-shaped part 130b so as to be pressed onto the star-shaped part 130b. This configuration permits rotation of the index cam 130 and the shift cam 50 while gear-shifting is performed, and holds the phases of the index cam 130 and the shift cam 50 while gear-shifting is not performed.

The body part 600a of the shift motor 600 is mounted to the inside surface 613RW2 such that the shaft part 600b extends outwardly in the vehicle width direction from the body part 600a. This allows the shaft part 600b of the shift motor 600 to protrude into the space SR. By disposing the shift motor 600 in this manner, it is possible to dispose the idle gears 62 and 64 and the index cam 130 in the space SR between the crankcase 610 (case member 610R) and the crankcase cover 620R. The shift cam 50 receives drive power from the shift motor 600 via the index cam 130 and the idle gears 62 and 64. That is, with the arrangement in which the idle gears 62 and 64 and the index cam 130 are disposed in the space SR, to which engine oil is supplied, the drive power transmission path extending from the shift motor 600 to the index cam 130 can be disposed in an environment suitable for lubrication. In addition, since the idle gear 62 is disposed in the space SR, the phase holding mechanism 145, which is configured to hold the phase of the index cam 130, can also be disposed in the space SR, which is in an environment considering lubrication.

As shown in FIGs. 3 to 5 and 10, the shift-cam phase sensor 720 is disposed at a location that is at the second end of the shift cam 50 (i.e., the left end in the drawings) and that is outside the crankcase 610 (case member 610L), which defines the space SL. As shown in FIGs. 3 to 5, a space around the installation position of the shift-cam phase sensor 720 includes the drive sprocket 9 disposed therein, and is in the air environment. In addition, around this position, there exists the drive chain 10 (see FIG. 2), which is attached to the drive sprocket 9 and requires a large movable range, and thus a space occupied by protrusion of the crankcase 610 (case member 610L) and protrusion of the crankcase cover 620L is limited. Therefore, the shift-cam phase sensor 720 can be disposed while avoiding the space SL, which is in the oil environment. Consequently, the shift-cam phase sensor 720 can be disposed in the air environment, to which engine oil is not supplied.

As described above, the shift cam 50 is rotatably supported by the crankcase 610. As shown in FIG. 10, the shift cam 50 has an outer peripheral surface provided with the cam grooves 52a to 52c. The cam grooves 52a to 52c are one example of the cam part. The cam part is not necessarily a groove, and may alternatively be a protrusion. Upon reception of the drive power outputted from the shift motor 600, the shift cam 50 rotates intermittently. The shift cam 50 is in parallel with the input shaft 20 and the output shaft 30.

The cam grooves 52a to 52c are configured to respectively accept parts of the shift forks 53a to 53c that are guided by the cam grooves 52a to 52c to move in the axial direction of the shift cam 50 along with rotation of the shift cam 50 (see FIG. 10). The shift forks 53a to 53c are disposed movably over the folk guide shaft 60 in the axial direction, and reside in the engagement grooves 440aG to 440cG of the sliders 440a to 440c, respectively. The folk guide shaft 60 is disposed in parallel with the shift cam 50 (see FIG. 10).

In the multistage transmission device 13, the plurality of driving gears 241 to 245 are constantly engaged with their corresponding driven gears 341 to 345. The multistage transmission device 13 is a constant mesh type transmission device. In the multistage transmission device 13, a combination of a driving gear and a driven gear for transmitting drive power is selected by rotation of the shift cam 50. When the shift cam 50 rotates, the shift forks 53a to 53c move in the axial direction along the cam grooves 52a to 52c. Consequently, the sliders 440a to 440c move in the axial direction together with the shift forks 53a to 53c. The correspondence relations between the positions of each of the sliders 440a to 440c and each of the gear stages are as described above.

As described above, in the present embodiment, the shift cam 50 is configured to cause, by its rotation, the shift forks 53a to 53a engaged to the cam parts (cam grooves 52a to 52c) to move, thereby causing the sliders 440a to 440c to move. The slider 440b is provided to the input shaft 20. The sliders 440a and 440c are provided to the output shaft 30. As described above, the shift cam 50 is configured to cause, by its rotation, the control targets (e.g., the shift forks 53a to 53c) mounted to each of the input shaft 20 and the output shaft 30 to move. The control targets may be provided to the input shaft 20 only or the output shaft 30 only.

In the present embodiment, the shift motor 600 is supported by the support wall 610RW2 of the crankcase 610R. Meanwhile, the clutch motor 700 is supported by the support wall 610LW1 of the crankcase 610L, which is not the crankcase 610R. The shaft part 600b of the shift motor 600 and the shaft part 700b of the clutch motor 700 extend toward opposite sides in the vehicle width direction. Thus, the motor installation position of the shift motor 600 and the motor installation position of the clutch motor 700 do not overlap each other in the front-rear direction and the top-bottom direction. That is, the motor installation positions can be dispersed. In addition, two motors, specifically, the shift motor 600 and the clutch motor 700 are respectively installed to the left and right parts of the left-right split type crankcase in a dispersed manner. Thus, protrusion of the motor installation positions in these parts of the crankcase can be prevented or reduced. Consequently, the multistage transmission device 13 including the shift motor 600 and the clutch motor 700 can be disposed in a compact manner as a whole.

In the present embodiment, the clutch motor 700 is positioned above both the input shaft 20 and the output shaft 30 in the top-bottom direction (Y direction). When seen in the vehicle width direction (Z direction), the clutch motor 700 is disposed such that the shaft part 700b is located between the rotational axis line 90P of the crankshaft 90 and the output shaft 30 in the front-rear direction (X direction) (see FIG. 4). Meanwhile, the shift motor 600 is disposed such that the shaft part 600b is located in the rear of the output shaft 30 in the front-rear direction (X direction) and the shaft part 600b is located below the input shaft 20 and the output shaft 30 in the top-bottom direction (Y direction). The output shaft 30 is located between the shaft part 600b and the shaft 50S of the shift cam 50. Consequently, the multistage transmission device 13 is configured such that the clutch motor 700 can be disposed in the upper rear portion of the space SC, in which the output shaft 30 and the driven gears 341 to 345 are stored, and the shift motor 600 can be disposed in the lower rear portion of the space SC. Consequently, the multistage transmission device 13 including the shift motor 600 and the clutch motor 700 can be disposed in a compact manner as a whole.

present invention is defined by the appended claims and it is not limited by the above examples.

### Reference Signs List

- 1: motorcycle
- 5: rear wheel (driving wheel)
- 6: engine unit
- 11: engine
- 12: clutch
- 13: multistage transmission device
- 20: input shaft
- 30: output shaft
- 50: shift cam
- 90: crankshaft
- 241, 242, 243, 244, 245: driving gear
- 341, 342, 343, 344, 345: driven gear
- 600: shift motor
- 610: crankcase
- 620L, 620R: crankcase cover
- 640: operation power transmission mechanism
- 700: clutch motor

## Claims

1. A straddled vehicle (1) comprising:
an engine (11) including
a crankcase (610) having a first inside surface (613RW2) and a second inside surface (613LW1), the first inside surface (613RW2) being located in a first direction when seen from a center of the straddled vehicle (1) and facing the center of the straddled vehicle (1), the second inside surface (613LW1) being located in a second direction when seen from the center of the straddled vehicle (1) and facing the center of the straddled vehicle (1), the first direction and the second direction being opposite to each other and constituting a vehicle width direction,
a first crankcase cover (620R) located outward of the crankcase (610) in the first direction,
a second crankcase cover (620L) located outward of the crankcase (610) in the second direction, and
a crankshaft (90) rotatably supported by the crankcase (610);
a multistage transmission device (13); and
a driving wheel (5) configured to rotate to cause the straddled vehicle (1) to run upon reception of drive power outputted from the engine (11) and transmitted via the multistage transmission device (13), wherein
the multistage transmission device (13) includes
an input shaft (20) rotatably supported by the crankcase (610), the input shaft (20) being configured to receive the drive power from the crankshaft (90), the input shaft (20) having a plurality of driving gears (241 - 245),
an output shaft (30) rotatably supported by the crankcase (610), the output shaft (30) having a plurality of driven gears (341 - 345) engaged with their corresponding driving gears (241 - 245), the output shaft (30) being configured to output the drive power toward the driving wheel (5),
a clutch (12) disposed on a drive power transmission path extending from the crankshaft (90) to the output shaft (30) and in a space between the crankcase (610) and the first crankcase cover (620R),
a clutch motor (700) configured to transmit to the clutch (12) via an operation power transmission mechanism (640) operation power for connecting or disconnecting the clutch (12),
a shift cam (50) rotatably supported by the crankcase (610) such that a shaft (50S) of the shift cam (50) is located in front of the output shaft (30) when seen in the vehicle width direction, the shift cam (50) having a cam part (52a - 52c) extending in a circumferential direction, the shift cam (50) being configured to rotate to change, among the plurality of driving gears (241 - 245) and the plurality of driven gears (341 - 345), paired driving gear (241 - 245) and driven gear (341 - 345) that transmit the drive power between the input shaft (20) and the output shaft (30), and
a shift motor (600) including a body part (600a) and a shaft part (600b) that rotatably protrudes from the body part (600a) and that is configured to output operation power by rotation, the shift motor (600) being configured to cause the shift cam (50) to rotate by causing the shaft part (600b) to rotate for up-shifting or down-shifting such that a rotation direction of the shaft part (600b) for up-shifting and a rotation direction of the shaft part (600b) for down-shifting are opposite to each other, the shift motor (600) being disposed to satisfy all of (A) to (D): (A) the shaft part (600b) is parallel with or substantially parallel with the input shaft (20), the output shaft (30), and the shaft (50S) of the shift cam (50); (B) the body part (600a) is at least partially located inward of outside surfaces (620LS, 620RS) of the first and second crankcase covers (620R, 620L) in the vehicle width direction; (C) when seen in the vehicle width direction, the shaft part (600b) is located in the rear of the output shaft (30) such that the output shaft (30) is located between the shaft part (600b) and the shaft (50S) of the shift cam (50) in a front-rear direction; and (D) the shift motor (600) is mounted to the first inside surface (613RW2) of the crankcase (610).

2. The straddled vehicle (1) according to claim 1, wherein
the body part (600a) of the shift motor (600) is mounted to the first inside surface (613RW2) of the crankcase (610) such that the shaft part (600b) extends outwardly in the vehicle width direction from the body part (600a).

3. The straddled vehicle (1) according to claim 1 or 2, wherein
the crankcase (610) has a support wall supporting at least the crankshaft (90), and
the body part (600a) of the shift motor (600) is mounted to the support wall such that the body part (600a) of the shift motor (600) is supported at least by the support wall.

4. The straddled vehicle (1) according to any one of claims 1 to 3, wherein
the crankcase (610) has a support wall supporting at least the output shaft (30) and the input shaft (20), and
the body part (600a) of the shift motor (600) is mounted to the support wall such that the body part (600a) of the shift motor (600) is supported at least by the support wall.

5. The straddled vehicle (1) according to any one of claims 2 to 4, wherein
the clutch motor (700) has a body part (700a) and a shaft part (700b) rotatably protruding from the body part (700a) and being configured to output operation power by rotation, and at least one of:
a) the body part (700a) of the clutch motor (700) is mounted to the second inside surface (613LW1) of the crankcase (610) such that the shaft part (700b) extends outwardly in the vehicle width direction from the body part (700a),
b) the crankcase (610) has a support wall supporting at least the crankshaft (90), and the body part (700a) of the clutch motor (700) is mounted to the support wall such that the body part (700a) of the clutch motor (700) is supported at least by the support wall, and
c) the crankcase (610) has a support wall supporting at least the output shaft (30) and the input shaft (20), and the body part (700a) of the clutch motor (700) is mounted to the support wall such that the body part (700a) of the clutch motor (700) is supported at least by the support wall.

6. The straddled vehicle (1) according to any one of claims 1 to 5, wherein
the crankcase (610) is a left-right split type crankcase, the crankcase (610) is mounted to the straddled vehicle (1) such that a mating plane of the crankcase (610) extends along the front-rear direction, and
the body part (600a) of the shift motor (600) is disposed to overlap a plane including the mating plane of the crankcase (610).

7. The straddled vehicle (1) according to claim 6, wherein
the crankcase (610) is constituted by a first case member (610R) disposed in the first direction relative to the mating plane of the crankcase (610) when seen from the center of the straddled vehicle (1) and a second case member (610L) disposed in the second direction relative to the mating plane of the crankcase (610) when seen from the center of the straddled vehicle (1), and
the first case member (610R) has the first inside surface (613RW2).

8. The straddled vehicle (1) according to claim 7, wherein
the second case member (610L) has the second inside surface (613LW1), and
the clutch motor (700) is mounted to the second inside surface (613LW1).

9. The straddled vehicle (1) according to any one of claims 1 to 8, wherein
the shift cam (50) has a driven gear located in the first direction when seen from the center of the straddled vehicle (1), the shift cam (50) being configured to receive the drive power transmitted from the shift motor (600).

10. The straddled vehicle (1) according to claim 9, wherein
the shift cam (50) is provided with a shift-cam phase sensor (720) located in the second direction when seen from the center of the straddled vehicle (1), the shift-cam phase sensor (720) being configured to detect a rotational position in the circumferential direction of the shift cam (50).

11. The straddled vehicle (1) according to any one of claims 1 to 10, wherein
the engine (11) has a displacement of 300 cc or less,
the driving wheel (5) is disposed in the rear of the engine (11) in the front-rear direction, and
the shift motor (600) is disposed between a rotational axis line of the crankshaft (90) of the engine (11) having a displacement of 300 cc or less and the driving wheel (5) when seen in the vehicle width direction.

12. The straddled vehicle (1) according to any one of claims 1 to 11, wherein
both the shift motor (600) and the shift cam (50) are disposed in a lower area or an upper area, the lower area residing below the output shaft (30), the upper area residing above the output shaft (30).

13. The straddled vehicle (1) according to any one of claims 1 to 12, wherein
the clutch (12) is mounted to the crankshaft (90) or the input shaft (20), and the clutch (12) is configured to be switched between a transmission state where a rotational force of the crankshaft (90) is transmitted to the driving wheel (5) and an interruption state where the rotational force is interrupted, and
the shift motor (600) is disposed to have a gap between the shift motor (600) and the clutch (12) when seen in the vehicle width direction.

14. The straddled vehicle (1) according to any one of claims 1 to 13, wherein
the crankcase (610) includes two engine-suspending portions disposed at locations different each other in a top-bottom direction when seen in the vehicle width direction, and
the shift motor (600) is disposed such that the body part (600a) of the shift motor (600) is at least partially positioned between the two engine-suspending portions in the top-bottom direction and overlaps the two engine-suspending portions in the top-bottom direction.

## Patentansprüche

1. Ein Grätschfahrzeug (1), das folgende Merkmale aufweist:
einen Motor (11) mit:
einem Kurbelgehäuse (610) mit einer ersten Innenseitenoberfläche (613RW2) und einer zweiten Innenseitenoberfläche (613LW1), wobei sich die erste Innenseitenoberfläche (613RW2) bei Betrachtung von einer Mitte des Grätschfahrzeugs (1) in einer ersten Richtung befindet und der Mitte des Grätschfahrzeugs (1) zugewandt ist, wobei sich die zweite Innenseitenoberfläche (613LW1) bei Betrachtung von der Mitte des Grätschfahrzeugs (1) in einer zweiten Richtung befindet und der Mitte des Grätschfahrzeugs (1) zugewandt ist, wobei die erste Richtung und die zweite Richtung entgegengesetzt zueinander sind und eine Fahrzeugbreitenrichtung darstellen,
einer ersten Kurbelgehäuseabdeckung (620R), die sich in der ersten Richtung außerhalb des Kurbelgehäuses (610) befindet,
einer zweiten Kurbelgehäuseabdeckung (620L), die sich in der zweiten Richtung außerhalb des Kurbelgehäuses (10) befindet, und
einer Kurbelwelle (90), die durch das Kurbelgehäuse (610) drehbar gelagert ist;
eine Mehrstufen-Übertragungsvorrichtung (13); und
ein Antriebsrad (5), das dazu ausgebildet ist, sich zu drehen, um zu bewirken, dass das Grätschfahrzeug (1) auf eine Aufnahme einer Antriebsleistung hin, die aus dem Motor (11) ausgegeben und über die Mehrstufen-Übertragungsvorrichtung (13) übertragen wird, läuft, wobei
die Mehrstufen-Übertragungsvorrichtung (13) Folgendes aufweist:
eine Eingangswelle (20), die durch das Kurbelgehäuse (610) drehbar gelagert ist, wobei die Eingangswelle (20) dazu ausgebildet ist, die Antriebsleistung von der Kurbelwelle (90) aufzunehmen, wobei die Eingangswelle (20) eine Mehrzahl von Antriebszahnrädern (241-245) aufweist,
eine Ausgangswelle (30), die durch das Kurbelgehäuse (610) drehbar gelagert ist, wobei die Ausgangswelle (30) eine Mehrzahl angetriebener Zahnräder (341-345) aufweist, die mit ihren entsprechenden Antriebszahnrädern (241-245) in Eingriff stehen, wobei die Ausgangswelle (30) dazu ausgebildet ist, die Antriebsleistung in Richtung des Antriebsrads (5) auszugeben,
eine Kupplung (12), die an einem Antriebsleistungsübertragungsweg angeordnet ist, der sich von der Kurbelwelle (90) zu der Ausgangswelle (30) erstreckt, sowie in einem Raum zwischen dem Kurbelgehäuse (610) und der ersten Kurbelgehäuseabdeckung (620R),
einen Kupplungsmotor (700), der dazu ausgebildet ist, über einen Betriebsleistungsübertragungsmechanismus (640) Betriebsleistung zum Verbinden oder Trennen der Kupplung (12) an die Kupplung (12) zu übertragen,
einen Schaltnocken (50), der durch das Kurbelgehäuse (610) derart drehbar gelagert ist, dass sich eine Welle (50S) des Schaltnockens (50) bei Betrachtung in der Fahrzeugbreitenrichtung vor der Ausgangswelle (30) befindet, wobei der Schaltnocken (50) einen Nockenteil (52a-52c) aufweist, der sich in einer Umfangsrichtung erstreckt, wobei der Schaltnocken (50) dazu ausgebildet ist, sich zu drehen, um unter der Mehrzahl von Antriebszahnrädern (241-245) und der Mehrzahl angetriebener Zahnräder (341-345) ein gepaartes Antriebszahnrad (241-245) und angetriebenes Zahnrad (341-345) zu ändern, die die Antriebsleistung zwischen der Eingangswelle (20) und der Ausgangswelle (30) übertragen, und
einen Schaltmotor (600), der einen Körperteil (600a) und einen Wellenteil (600b) aufweist, der von dem Körperteil (600a) drehbar vorsteht und der dazu ausgebildet ist, Betriebsleistung durch Drehung auszugeben, wobei der Schaltmotor (600) dazu ausgebildet ist, zu bewirken, dass sich der Schaltnocken (50) dreht, indem bewirkt wird, dass sich der Wellenteil (600b) dreht, und zwar zum Hochschalten oder Herunterschalten, derart, dass eine Drehrichtung des Wellenteils (600b) zum Hochschalten und eine Drehrichtung des Wellenteils (600b) zum Herunterschalten entgegengesetzt zueinander sind, wobei der Schaltmotor (600) dazu angeordnet ist, um alles von (A) bis (D) zu erfüllen: (A) der Wellenteil (600b) ist parallel zu oder im Wesentlichen parallel zu der Eingangswelle (20), der Ausgangswelle (30) und der Welle (50S) des Schaltnockens (50); (B) der Körperteil (600a) befindet sich in der Fahrzeugbreitenrichtung zumindest teilweise innerhalb von Außenseitenoberflächen (620LS, 620RS) der ersten und zweiten Kurbelgehäuseabdeckung (620R, 620L); (C) bei Betrachtung in der Fahrzeugbreitenrichtung befindet sich der Wellenteil (600b) hinter der Ausgangswelle (30), derart, dass sich die Ausgangswelle (30) zwischen dem Wellenteil (600b) und der Welle (50S) des Schaltnockens (50) in einer Vorne-Hinten-Richtung befindet; und (D) der Schaltmotor (600) ist an der ersten Innenseitenoberfläche (613RW2) des Kurbelgehäuses (610) angebracht.

2. Das Grätschfahrzeug (1) gemäß Anspruch 1, bei dem
der Körperteil (600a) des Schaltmotors (600) an der ersten Innenseitenoberfläche (613RW2) des Kurbelgehäuses (610) derart angebracht ist, dass sich der Wellenteil (600b) in der Fahrzeugbreitenrichtung von dem Körperteil (600a) nach außen erstreckt.

3. Das Grätschfahrzeug (1) gemäß Anspruch 1 oder 2, bei dem
das Kurbelgehäuse (610) eine Trägerwand aufweist, die zumindest die Kurbelwelle (90) trägt, und
der Körperteil (600a) des Schaltmotors (600) an der Trägerwand derart angebracht ist, dass der Körperteil (600a) des Schaltmotors (600) zumindest durch die Trägerwand getragen wird.

4. Das Grätschfahrzeug (1) gemäß einem der Ansprüche 1 bis 3, bei dem
das Kurbelgehäuse (610) eine Trägerwand aufweist, die zumindest die Ausgangswelle (30) und die Eingangswelle (20) trägt, und
der Körperteil (600a) des Schaltmotors (600) an der Trägerwand derart angebracht ist, dass der Körperteil (600a) des Schaltmotors (600) zumindest durch die Trägerwand getragen wird.

5. Das Grätschfahrzeug (1) gemäß einem der Ansprüche 2 bis 4, bei dem
der Kupplungsmotor (700) einen Körperteil (700a) und einen Wellenteil (700b) aufweist, der von dem Körperteil (700a) drehbar vorsteht und dazu ausgebildet ist, Betriebsleistung durch Drehung auszugeben, wobei zumindest eines von Folgenden zutrifft:
(a) der Körperteil (700a) des Kupplungsmotors (700) ist an der zweiten Innenseitenoberfläche (613LW1) des Kurbelgehäuses (610) derart angebracht, dass der Wellenteil (700b) sich in der Fahrzeugbreitenrichtung von dem Körperteil (700a) nach außen erstreckt,
(b) das Kurbelgehäuse (610) weist eine Trägerwand auf, die zumindest die Kurbelwelle (90) trägt, und der Körperteil (700a) des Kupplungsmotors (700) ist an der Trägerwand derart angebracht, dass der Körperteil (700a) des Kupplungsmotors (700) zumindest durch die Trägerwand getragen wird, und
(c) das Kurbelgehäuse (610) weist eine Trägerwand auf, die zumindest die Ausgangswelle (30) und die Eingangswelle (20) trägt, und der Körperteil (700a) des Kupplungsmotors (700) ist an der Trägerwand derart angebracht, dass der Körperteil (700a) des Kupplungsmotors (700) zumindest durch die Trägerwand getragen wird.

6. Das Grätschfahrzeug (1) gemäß einem der Ansprüche 1 bis 5, bei dem
das Kurbelgehäuse (610) ein Links-Rechts-Teilungstyp-Kurbelgehäuse ist, das Kurbelgehäuse (610) derart an dem Grätschfahrzeug (1) angebracht ist, dass sich eine Passebene des Kurbelgehäuses (610) entlang der Vorne-Hinten-Richtung erstreckt, und
der Körperteil (600a) des Schaltmotors (600) dazu angeordnet ist, eine Ebene zu überlappen, die die Passebene des Kurbelgehäuses (610) beinhaltet.

7. Das Grätschfahrzeug (1) gemäß Anspruch 6, bei dem
das Kurbelgehäuse (610) durch ein erstes Gehäusebauteil (610R), das bei Betrachtung von der Mitte des Grätschfahrzeugs (1) in der ersten Richtung relativ zu der Passebene des Kurbelgehäuses (610) angeordnet ist, und ein zweites Gehäusebauteil (610L) ausgebildet ist, das bei Betrachtung von der Mitte des Grätschfahrzeugs (1) in der zweiten Richtung relativ zu der Passebene des Kurbelgehäuses (610) angeordnet ist, und
das erste Gehäusebauteil (610R) die erste Innenseitenoberfläche (613RW2) aufweist.

8. Das Grätschfahrzeug (1) gemäß Anspruch 7, bei dem
das zweite Gehäusebauteil (610L) die zweite Innenseitenoberfläche (613LW1) aufweist und
der Kupplungsmotor (700) an der zweiten Innenseitenoberfläche (613LW1) angebracht ist.

9. Das Grätschfahrzeug (1) gemäß einem der Ansprüche 1 bis 8, bei dem
der Schaltnocken (50) ein angetriebenes Zahnrad aufweist, das sich bei Betrachtung von der Mitte des Grätschfahrzeugs (1) in der ersten Richtung befindet, wobei der Schaltnocken (50) dazu ausgebildet ist, die Antriebsleistung aufzunehmen, die von dem Schaltmotor (600) übertragen wird.

10. Das Grätschfahrzeug (1) gemäß Anspruch 9, bei dem
der Schaltnocken (50) mit einem Schaltnockenphasensensor (720) versehen ist, der sich bei Betrachtung von der Mitte des Grätschfahrzeugs (1) in der zweiten Richtung befindet, wobei der Schaltnockenphasensensor (720) dazu ausgebildet ist, eine Rotationsposition in der Umfangsrichtung des Schaltnockens (50) zu erfassen.

11. Das Grätschfahrzeug (1) gemäß einem der Ansprüche 1 bis 10, bei dem
der Motor (11) einen Hubraum von 300 cc oder weniger aufweist,
das Antriebsrad (5) in der Vorne-Hinten-Richtung hinter dem Motor (11) angeordnet ist und
der Schaltmotor (600) bei Betrachtung in der Fahrzeugbreitenrichtung zwischen einer Rotationsachsenlinie der Kurbelwelle (90) des Motors (11) mit einem Hubraum von 300 cc oder weniger und dem Antriebsrad (5) angeordnet ist.

12. Das Grätschfahrzeug (1) gemäß einem der Ansprüche 1 bis 11, bei dem
sowohl der Schaltmotor (600) als auch der Schaltnocken (50) in einem unteren Bereich oder einem oberen Bereich angeordnet sind, wobei sich der untere Bereich unterhalb der Ausgangswelle (30) befindet, wobei sich der obere Bereich oberhalb der Ausgangswelle (30) befindet.

13. Das Grätschfahrzeug (1) gemäß einem der Ansprüche 1 bis 12, bei dem
die Kupplung (12) an der Kurbelwelle (90) oder der Eingangswelle (20) angebracht ist und die Kupplung (12) dazu ausgebildet ist, zwischen einem Übertragungszustand, bei dem eine Rotationskraft der Kurbelwelle (90) auf das Antriebsrad (5) übertragen wird, und einem Unterbrechungszustand geschaltet zu werden, bei dem die Rotationskraft unterbrochen ist, und
der Schaltmotor (600) bei Betrachtung in der Fahrzeugbreitenrichtung so angeordnet ist, dass ein Spalt zwischen dem Schaltmotor (600) und der Kupplung (12) vorliegt.

14. Das Grätschfahrzeug (1) gemäß einem der Ansprüche 1 bis 13, bei dem
das Kurbelgehäuse (610) zwei Motoraufhängungsabschnitte aufweist, die bei Betrachtung in der Fahrzeugbreitenrichtung an in einer Oben-Unten-Richtung voneinander unterschiedlichen Orten angeordnet sind, und
der Schaltmotor (600) derart angeordnet ist, dass der Körperteil (600a) des Schaltmotors (600) zumindest teilweise zwischen den beiden Motoraufhängungsabschnitten in der Oben-Unten-Richtung positioniert ist und die beiden Motoraufhängungsabschnitte in der Oben-Unten-Richtung überlappt.

## Revendications

1. Véhicule à selle (1) comprenant:
un moteur (11) comportant
un carter (610) présentant une première surface intérieure (613RW2) et une deuxième surface intérieure (613LW1), la première surface intérieure (613RW2) étant située dans une première direction lorsque vue depuis un centre du véhicule à selle (1) et faisant face au centre du véhicule à selle (1), la deuxième surface intérieure (613LW1) étant située dans une deuxième direction lorsque vue depuis le centre du véhicule à selle (1) et faisant face au centre du véhicule à selle (1), la première direction et la deuxième direction étant opposées l'une à l'autre et constituant une direction de la largeur du véhicule,
un premier couvercle de carter (620R) situé à l'extérieur du carter (610) dans la première direction,
un deuxième couvercle de carter (620L) situé à l'extérieur du carter (610) dans la deuxième direction, et
un vilebrequin (90) supporté de manière rotative par le carter (610);
un dispositif de transmission à étages multiples (13); et
une roue d'entraînement (5) configurée pour tourner pour amener le véhicule à selle (1) à rouler lors de la réception de la puissance d'entraînement sortie par le moteur (11) et transmise par l'intermédiaire du dispositif de transmission à étages multiples (13),
dans lequel
le dispositif de transmission à étages multiples (13) comporte
un arbre d'entrée (20) supporté de manière rotative par le carter (610), l'arbre d'entrée (20) étant configuré pour recevoir la puissance d'entraînement du vilebrequin (90), l'arbre d'entrée (20) présentant une pluralité d'engrenages d'entraînement (241 à 245),
un arbre de sortie (30) supporté de manière rotative par le carter (610), l'arbre de sortie (30) présentant une pluralité d'engrenages entraînés (341 à 345) en prise avec leurs engrenages d'entraînement correspondants (241à 245), l'arbre de sortie (30) étant configuré pour sortir la puissance d'entraînement vers la roue d'entraînement (5),
un embrayage (12) disposé sur un trajet de transmission de puissance d'entraînement s'étendant du vilebrequin (90) à l'arbre de sortie (30) et dans un espace entre le carter (610) et le premier couvercle de carter (620R),
un moteur d'embrayage (700) configuré pour transmettre à l'embrayage (12), par l'intermédiaire d'un mécanisme de transmission de puissance de fonctionnement (640), une puissance de fonctionnement destinée à connecter ou déconnecter l'embrayage (12),
une came de changement de vitesse (50) supportée de manière rotative par le carter (610) de sorte qu'un arbre (50S) de la came de changement de vitesse (50) soit situé devant l'arbre de sortie (30) lorsque vu dans la direction de la largeur du véhicule, la came de changement de vitesse (50) présentant une partie de came (52a à 52c) s'étendant dans une direction circonférentielle, la came de changement de vitesse (50) étant configurée pour tourner pour changer, parmi la pluralité d'engrenages d'entraînement (241 à 245) et la pluralité de d'engrenages entraînés (341 à 345), un engrenage d'entraînement (241 à 245) et un engrenage entraîné (341 à 345) formant une paire qui transmettent la puissance d'entraînement entre l'arbre d'entrée (20) et l'arbre de sortie (30), et
un moteur de changement de vitesse (600) comportant une partie de corps (600a) et une partie d'arbre (600b) qui ressort de manière rotative de la partie de corps (600a) et qui est configuré pour sortir une puissance de fonctionnement par rotation, le moteur de changement de vitesse (600) étant configuré pour amener la came de changement de vitesse (50) à tourner en amenant la partie d'arbre (600b) à tourner pour changer en augmentant ou en réduisant la vitesse de sorte qu'une direction de rotation de la partie d'arbre (600b) pour augmenter la vitesse et une direction de rotation de la partie d'arbre (600b) pour réduire la vitesse soient opposées l'une à l'autre, le moteur de changement de vitesse (600) étant disposé de manière à satisfaire tous les points de (A) à (D): (A) la partie d'arbre (600b) est parallèle ou sensiblement parallèle à l'arbre d'entrée (20), à l'arbre de sortie (30), et à l'arbre (50S) de la came de changement de vitesse (50); (B) la partie de corps (600a) est au moins partiellement située à l'intérieur des surfaces extérieures (620LS, 620RS) des premier et deuxième couvercles de carter (620R, 620L) dans la direction de la largeur du véhicule; (C) lorsque vue dans la direction de la largeur du véhicule, la partie d'arbre (600b) est située à l'arrière de l'arbre de sortie (30) de sorte que l'arbre de sortie (30) soit situé entre la partie d'arbre (600b) et l'arbre (50S) de la came de changement de vitesse (50) dans une direction avant-arrière; et (D) le moteur de changement de vitesse (600) est monté sur la première surface intérieure (613RW2) du carter (610).

2. Véhicule à selle (1) selon la revendication 1, dans lequel
la partie de corps (600a) du moteur de changement de vitesse (600) est montée sur la première surface intérieure (613RW2) du carter (610) de sorte que la partie d'arbre (600b) s'étende vers l'extérieur dans la direction de la largeur du véhicule à partir de la partie de corps (600a).

3. Véhicule à selle (1) selon la revendication 1 ou 2, dans lequel
le carter (610) présente une paroi de support supportant au moins le vilebrequin (90), et
la partie de corps (600a) du moteur de changement de vitesse (600) est montée sur la paroi de support de sorte que la partie de corps (600a) du moteur de changement de vitesse (600) soit supportée au moins par la paroi de support.

4. Véhicule à selle (1) selon l'une quelconque des revendications 1 à 3, dans lequel
le carter (610) présente une paroi de support supportant au moins l'arbre de sortie (30) et l'arbre d'entrée (20), et
la partie de corps (600a) du moteur de changement de vitesse (600) est montée sur la paroi de support de sorte que la partie de corps (600a) du moteur de changement de vitesse (600) soit supportée au moins par la paroi de support.

5. Véhicule à selle (1) selon l'une quelconque des revendications 2 à 4, dans lequel
le moteur d'embrayage (700) présente une partie de corps (700a) et une partie d'arbre (700b) ressortant de manière rotative de la partie de corps (700a) et étant configurée pour sortir une puissance de fonctionnement par rotation, et au moins l'un parmi:
a) la partie de corps (700a) du moteur d'embrayage (700) est montée sur la deuxième surface intérieure (613LW1) du carter (610) de sorte que la partie d'arbre (700b) s'étende vers l'extérieur dans la direction de la largeur du véhicule à partir de la partie de corps (700a),
b) le carter (610) présente une paroi de support supportant au moins le vilebrequin (90), et la partie de corps (700a) du moteur d'embrayage (700) est montée sur la paroi de support de sorte que la partie de corps (700a) du moteur d'embrayage (700) soit supportée au moins par la paroi de support, et
c) le carter (610) présente une paroi de support supportant au moins l'arbre de sortie (30) et l'arbre d'entrée (20), et la partie de corps (700a) du moteur d'embrayage (700) est montée sur la paroi de support de sorte que la partie de corps (700a) du moteur d'embrayage (700) soit supportée au moins par la paroi de support.

6. Véhicule à selle (1) selon l'une quelconque des revendications 1 à 5, dans lequel
le carter (610) est un carter du type divisé gauche-droite, le carter (610) est monté sur le véhicule à selle (1) de sorte qu'un plan correspondant du carter (610) s'étende dans la direction avant-arrière, et
la partie de corps (600a) du moteur de changement de vitesse (600) est disposée de manière à venir en chevauchement avec un plan comportant le plan correspondant du carter (610).

7. Véhicule à selle (1) selon la revendication 6, dans lequel
le carter (610) est constitué d'un premier élément de carter (610R) disposé dans la première direction par rapport au plan correspondant du carter (610) lorsque vu depuis le centre du véhicule à selle (1) et d'un deuxième élément de carter (610L) disposé dans la deuxième direction par rapport au plan correspondant du carter (610) lorsque vu depuis le centre du véhicule à selle (1), et
le premier élément de carter (610R) présente la première surface intérieure (613RW2).

8. Véhicule à selle (1) selon la revendication 7, dans lequel
le deuxième élément de carter (610L) présente la deuxième surface intérieure (613LW1), et
le moteur d'embrayage (700) est monté sur la deuxième surface intérieure (613LW1).

9. Véhicule à selle (1) selon l'une quelconque des revendications 1 à 8, dans lequel
la came de changement de vitesse (50) présente un engrenage entraîné situé dans la première direction lorsque vu depuis le centre du véhicule à selle (1), la came de changement de vitesse (50) étant configurée pour recevoir la puissance d'entraînement transmise par le moteur de changement de vitesse (600).

10. Véhicule à selle (1) selon la revendication 9, dans lequel
la came de changement de vitesse (50) est pourvue d'un capteur de phase de came de changement de vitesse (720) situé dans la deuxième direction lorsque vu depuis le centre du véhicule à selle (1), le capteur de phase de came de changement de vitesse (720) étant configuré pour détecter une position de rotation dans la direction circonférentielle de la came de changement de vitesse (50).

11. Véhicule à selle (1) selon l'une quelconque des revendications 1 à 10, dans lequel
le moteur (11) présente une cylindrée de 300 cc ou moins,
la roue d'entraînement (5) est disposée à l'arrière du moteur (11) dans la direction avant-arrière, et
le moteur de changement de vitesse (600) est disposé entre une ligne d'axe de rotation du vilebrequin (90) du moteur (11) ayant une cylindrée de 300 cc ou moins et la roue d'entraînement (5), vu dans la direction de la largeur du véhicule.

12. Véhicule à selle (1) selon l'une quelconque des revendications 1 à 11, dans lequel
tant le moteur de changement de vitesse (600) que la came de changement de vitesse (50) sont disposés dans une zone inférieure ou une zone supérieure, la zone inférieure résidant au-dessous de l'arbre de sortie (30), la zone supérieure résidant au-dessus de l'arbre de sortie (30).

13. Véhicule à selle (1) selon l'une quelconque des revendications 1 à 12, dans lequel
l'embrayage (12) est monté sur le vilebrequin (90) ou l'arbre d'entrée (20), et l'embrayage (12) est configuré pour être commuté entre un état de transmission où une force de rotation du vilebrequin (90) est transmise à la roue d'entraînement (5) et un état d'interruption où la force de rotation est interrompue, et
le moteur de changement de vitesse (600) est disposé de manière à présenter un espace entre le moteur de changement de vitesse (600) et l'embrayage (12), lorsque vu dans la direction de la largeur du véhicule.

14. Véhicule à selle (1) selon l'une quelconque des revendications 1 à 13, dans lequel
le carter (610) comporte deux parties de suspension de moteur disposées à des endroits différents l'un de l'autre dans une direction de haut en bas, lorsque vus dans la direction de la largeur du véhicule, et
le moteur de changement de vitesse (600) est disposé de sorte que la partie de corps (600a) du moteur de changement de vitesse (600) soit positionnée au moins partiellement entre les deux parties de suspension de moteur dans la direction de haut en bas et vienne en chevauchement avec les deux parties de suspension de moteur dans la direction de haut en bas.
